# EUROPEAN PATENT APPLICATION

(11) **EP 4 726 483 A1**
(43) Date of publication of application: **15.04.2026**
(21) Application number: 24205616.6
(22) Date of filing: 09.10.2024
(51) Int. Cl.: G05B 19/042

(54) **INPUT/OUTPUT-COMPONENT (IO-COMPONENT) FOR A CONTROL DEVICE FOR CONTROLLING A DEVICE OR SYSTEM**

(71) Applicant: Siemens Aktiengesellschaft, 80333 München (DE)
(72) Inventor: Haneder, Thomas, 92224 Amberg (DE); Lindemann, Lars, 92637 Weiden (DE); Rost, Julian, 91058 Erlangen (DE)
(74) Representative: Siemens Patent Attorneys

(57) **Abstract**

The present invention describes an input/output-component (200) (IO-component) for a control device (100) for controlling a device (400) or system,
wherein the IO-component (200) is designed and set up
- for input and/or output of IO control data (263) into and/or out of the control device (100) via a communication link (202) using a communication protocol,
- and for connection to a middleware component (150) of the control device (100),

and wherein the IO-component (200) is designed and set up for converting IO control data (263) received via the communication link (202) into middleware variables (152) assigned to the IO control data (263), and subsequently for transmitting these middleware variables (152) to the middleware component (150),
characterized in,
that the IO-component (200) is designed and set up for converting the IO control data (263) into the middleware variables (152) in such a way,
- that the middleware variables (152) are independent of the communication protocol,
- and that, as part of the conversion of the IO control data (263) into the protocol-independent middleware variables (152), a normalization, standardization, logical structuring and/or contextualization of the IO control data (263) takes place.

## Description

The present invention is about an Input/Output-component (IO-component) for a control device for controlling a device or system,
wherein the IO-component is designed and set up
   - for input and/or output of IO control data into and/or out of the control device via a communication link using a communication protocol,
   - and for connection to a middleware component of the control device,
and wherein the IO-component is designed and set up for converting IO control data received via the communication link into middleware variables assigned to the IO control data, and subsequently for transmitting these middleware variables to the middleware component.

Such systems are known from the prior art.

The publication EP 4 343 467 A2 discloses a real-time controller equipped with a real-time data bus and a memory device. The real-time data bus facilitates the communication of values assigned to bus variables from a source to a receiver. The memory device contains a software application that can receive and send values through the real-time data bus. This software application includes two modules: an application software module and an interface software module. The application software module is responsible for executing the specific functionalities of the software application, e.g. involving values assigned to bus variables. The interface software module handles the transmission of these values between the application software module and the real-time data bus. The controller includes a memory area in which a first PLC application and a second PLC application are installed, which include control programs that are set up and provided for controlling the system. Furthermore, a first input-output application and a second input-output application are installed in the memory area, the first input-output application being used to communicate with the robot via a fieldbus interface of the real-time controller and a corresponding fieldbus is designed and set up. The second input-output application is designed and set up to communicate with the packaging machine via a digital input-output interface of the real-time controller and corresponding connecting lines.

It is a disadvantage of the aforementioned prior art that the known Input/Output-components (IO-components) inflexible. They are closely adapted to the communication protocol used and/or the hardware and software setup of the according controller - e.g. communication-bus formats of the controller. Therefore, it can be e.g. quite cumbersome to integrate further applications and/or modules with the controller, because they must be especially adapted to the It is therefore a task of the present invention to provide a controller and/or an IO-component for a controller which enables an easier integration and/or connection of other software applications and/or other modules with the controller.

This task is solved by an IO-component with the features of claim 1.

Such Input/Output-component (IO-component) is designed and set up for a control device for controlling a device or system,
wherein the IO-component is further designed and set up
   - for input and/or output of IO control data into and/or out of the control device via a communication link using a communication protocol,
   - and for connection to a middleware component of the control device,
and wherein the IO-component is designed and set up for converting IO control data received via the communication link into middleware variables assigned to the IO control data, and subsequently for transmitting these middleware variables to the middleware component, characterized in,
that the IO-component is designed and set up for converting the IO control data into the middleware variables in such a way,
   - that the middleware variables are independent of the communication protocol,
   - and that, as part of the conversion of the IO control data into the protocol-independent middleware variables, a normalization, standardization, logical structuring and/or contextualization of the IO control data takes place.

The IO-component is designed to facilitate the input and output of IO control data between the control device and external systems or devices via a communication link using a communication protocol. The IO-component is also designed to connect to a middleware component of the control device. The primary function of the IO-component is to convert IO control data received via the communication link into middleware variables assigned to the IO control data and subsequently transmit these middleware variables to the middleware component. A key feature of this IO-component is that it converts the IO control data into middleware variables in such a way that the middleware variables are independent of the communication protocol. Additionally, e.g. as part of the conversion process, a normalization, standardization, logical structuring and/or contextualization of the IO control data takes place. The IO-component can also be designed and set up in a way, that the conversion consists of a normalization, standardization, logical structuring and/or contextualization of the IO control data.

The setup of the IO-component solves a current challenge in industrial automation and control systems: the need for seamless and reliable communication between various components, such as sensors, actuators, and control devices, which often use different communication protocols. In traditional systems, this challenge is typically addressed by very specifically adapting different parts of an automation controller to each other. This is a very time-consuming process that must be repeated each time a controller component is changed, or a new component is added to the controller.

An IO-component according to the present description offers a more efficient and flexible solution by standardizing the way IO control data is handled within the control device. This standardization is achieved through the conversion of raw IO control data into middleware variables that are independent of any specific communication protocol. By doing so, the IO-component ensures that data from various sources can be consistently interpreted and processed by the control device, regardless of the underlying communication protocols used by external systems or devices.

The wording "IO-component for a control device for controlling a device or system" means, that the IO-component (Input/Output-component) is designed and set up for use as a component of the control device and/or in cooperation with the control device. And the control device is designed and set up for controlling the device or system.

A control device can be any type of computer, computer system, software or software system that is designed and set up to control a device, a machine, a system, an apparatus, a component or an appliance. The control device can preferable be designed and set up for real-time control of a device, a machine, a system, an apparatus, a component or an appliance. The control device can comprise a control program for controlling the device or system. In a preferred embodiment the control device and control program are designed and set up for real-time control of the device or system.

A control-device can be a computer, a computer system or a so-called cloud on which control software or a control software application, for example a control application, is implemented, instantiated or installed. Such a control application implemented on a computer or in a cloud can, for example, be designed and set up as one or more applications with the functionality of a controller or programmable logic controller.

A control device can also be a control software application as described above. Such kind of control devices are also called software controllers. So called virtual PLCs or soft-PLCs (see below) are examples for such software controllers. Such software controllers can be designed and set up as modular software controllers, comprising several software modules or software applications connected by a data bus or so-called middleware. This data bus or middleware can also be realized as a software module or software application.

A control device can be designed and set up as an automation controller. Such automation controller is a specialized computing device used to manage and control industrial automation processes. It acts as the brain of an automation system, executing control algorithms to regulate machinery, processes, and equipment in real-time. Automation controllers can range from simple Programmable Logic Controllers (PLCs) to more complex Distributed Control Systems (DCS). These controllers' interface with various input/output (I/O) devices such as sensors, actuators, and human-machine interfaces (HMIs) to gather data and issue commands. They are designed to operate in harsh industrial environments, offering high reliability, robustness, and real-time performance. Automation controllers often support multiple communication protocols like Ethernet/IP, Modbus TCP/IP, and PROFINET to ensure seamless integration with other industrial devices and systems. Advanced automation controllers may also include features like data logging, remote monitoring, and predictive maintenance capabilities. Automation controllers often support multiple programming languages and standards, such as IEC 61131-3 for PLCs, ensuring compatibility with various industrial devices and systems.

A control device can also be designed and set up as a so-called edge device, whereby such an edge device can, for example, comprise an application for controlling devices or systems. For example, such an application can be designed and set up as an application with the functionality of a programmable logic controller. The edge device can, for example, be connected to another control device of a device or system or also directly to a device or system to be controlled. Furthermore, the edge device can be designed and set up in such a way that it is also connected to a data network or a cloud or is designed and set up to connect to a corresponding data network or a corresponding cloud.

For example, the control device can also be designed and configured as a programmable logic controller (PLC). Furthermore, the control device can also be set up and designed as a so-called modular programmable logic controller (modular PLC).

A control device can comprise a control module or central module, which is designed and set up to run a control program. The control module can, for example, include the functionality defined by the IEC 61131 standard.

A control module can also be designed and set up as a software application, for example, which is designed and set up to run a control program in real time to control the processing component. The software application can, for example, include the functionality defined in the IEC 61131 and/or IEC 61499 standard.

A control module can also be designed and set up as a separate mechanical module or a separate assembly, which is designed and set up for the real-time execution of a control program. Such a mechanical module or assembly can also include, for example, the functionality defined by the IEC 61131 and/or IEC 61499 standard. For example, the control module can be designed and set up as a programmable logic controller itself or, for example, as a central module of a modular programmable logic controller. The control module can, for example, comprise the functionality of an input/output module or not comprise the functionality of an input/output module.

A programmable logic controller, or PLC for short, is a component that is programmed and used to regulate or control a system or machine. Specific functions such as sequence control can be implemented in PLCs so that both the input and output signals of processes or machines can be controlled in this way. Programmable logic controllers are defined, for example, in the IEC 61131 and/or IEC 61499 standard.

To connect a programmable logic controller to the system or machine, both actuators, which are generally connected to the outputs of the programmable logic controller, and sensors, which are generally connected to the inputs of the programmable logic controller, are used. Status displays are also used. The sensors are generally located at the PLC inputs, whereby they provide the programmable logic controller with information about the current actual status of the system. Sensors include, for example Light barriers, limit switches, buttons, incremental encoders, level sensors, temperature sensors. Actuators are for example Contactors for switching on electric motors, electric valves for compressed air or hydraulics, drive control modules, motors, drives.

A PLC can be implemented in various ways. This means that it can be realized as a single electronic device, as a software emulation, as a so-called "virtual PLC" or "soft PLC", as a PC plug-in card etc.. Modular solutions are also possible, in which the PLC is assembled from several modules. Such modules can be, for example, a central control module, an input/output module (for example an IO-component according to the present description), a communication module, an inverter module, an application module or comparable modules.

A virtual PLC or a so-called soft PLC is a programmable logic controller that is implemented as a software application and can or does run on a computer device, an industrial PC or other PC, a computing device or, for example, an EDGE device. In this case, it is also possible to execute a virtual PLC or soft PLC in a modular way. In this case, individual functionalities of a programmable logic controller or PLC are designed as individual software modules, which can be connected or linked via so-called middleware. Such modules can be, for example, a central control software module (e.g. which includes at least the properties specified by the IEC 61131 standard), a communication module (for example an IO-component according to the present description) for coupling to a fieldbus, to certain devices or devices, to an Ethernet, an OPC-UA or comparable communication standards, a web server module, an HMI module (HMI: human machine interface) and/or an application module according to the present description.

A modular programmable logic controller can be designed and set up in such a way that several modules can be or are provided, whereby one or more extension modules can generally be provided in addition to a so-called central module (also known as a central control module or CPU) which is designed and set up to run a control program, e.g. to control a component, machine or system (or part thereof). Such expansion modules can, for example, be designed and set up as a current/voltage supply or also as an IO module or IO component for input and/or output of signals or also as a function module or application module for taking over special tasks (e.g. a counter, an inverter, data processing with artificial intelligence methods (includes, for example, a neural network or another ML model) ...).

For example, a function module or application module can also be designed and set up as an AI module for executing actions using artificial intelligence methods. Such a functional module may comprise, for example, a neural network or an ML model as described herein or another ML model as described herein.

An Input/Output-component - in short: IO-component - is an essential element in control devices used for industrial automation. It is designed to facilitate the input and output of IO control data between the control device and external systems or devices via a communication link. The IO-component converts this data into middleware variables, which are then transmitted to a middleware component within the control device. The conversion according to the present invention ensures that the data format is independent of the communication protocol used, allowing for greater flexibility and interoperability. In course of this conversion, the IO-component also handles the normalization, standardization, logical structuring and/or contextualization of the data, making it easier understandable and handleable for various applications within the control system.

The IO-component can further be designed and set up to also support the input and output of IO diagnostic data and/or IO alarm data. IO diagnostic data provides insights into the health and status of connected devices, while IO alarm data indicates abnormal conditions or events that require immediate attention. Both types of data can e.g. be converted into normalized, standardized, logical structured and/or communication-protocol-independent middleware data, e.g. middleware diagnostic information and/or middleware event information, for centralized monitoring and response. This ability of the IO-component will be explained in more detail below.

The term "IO data" is used in this description for summarizing multiple or all data categories transmitted or to be transmitted via the communication link. IO data can comprise for example:
- IO control data: data communicated via the communication link regarding the control of the device or system by the control device,
- IO diagnostic data: diagnostic data communicated via the communication link regarding the control device or the system or device,
- IO alarm data: data communicated via the communication link regarding alarms, e.g. by the control device or the system or device.

The terms "middleware data" and "middleware information" are used in this description for summarizing multiple or all data categories transmitted or to be transmitted via the middleware component. Middleware data can comprise for example: middleware variables according to the present description, middleware diagnostic information according to the present description and/or middleware event information according to the present description.

The IO-component can e.g. be designed and set up to decouple a communication with the middleware component from a communication via the communication link. Converting IO control data to communication protocol independent middleware variables can be a first aspect of such decoupling. Additional aspects of such decoupling can e.g. be a conversion of IO diagnostic data and/or IO alarm data provided via the communication link to corresponding communication protocol independent middleware data, e.g. middleware diagnostic information and/or middleware event information.

A further aspect of a decoupling of a communication with the middleware component from a communication via the communication link can be a decoupling of possible data provisioning cycles for exchanging data with the middleware and/or inside the control device, e.g. with other modules of the control device, from data provisioning cycles of the communication link or of the communication via the communication link.

The IO-component can for example be designed and set up to decouple the communication via the communication link, from the communication to the middleware and/or from the communication inside the control device, e.g. with other modules of the control device, e.g. via the middleware. Such decoupling can e.g. be designed and set up in a way, e.g. among others, that possible data provisioning cycles for exchanging data with the middleware and/or inside the control device, e.g. with other modules of the control device, e.g. via the middleware, are independent and/or decoupled from data provisioning cycles of the communication link or the communication via the communication link.

Such communication to the middleware, e.g. such data provisioning cycles for exchanging data with the middleware and/or inside the control device, e.g. with other modules of the control device, e.g. via the middleware, can be configured, e.g. by a configuration interface of the IO-component and/or according to the present description. Corresponding parameters can be set and changed, e.g. according to the present description. The communication via the communication link or corresponding data provisioning cycles of such communication, can also be configured, e.g. by a configuration interface of the IO-component and/or according to the present description. Corresponding parameters can be set and changed, e.g. according to the present description.

The IO-component can be designed and set-up to be real-time capable. This can enable e.g. real-time control of a device or system connected to the control device via the communication link and the IO-component.

The IO-component can e.g. be realized as a hardware component. Such hardware IO-component can e.g. be realized as a hardware module for a control device. Such hardware module can e.g. be designed and set up as an internal module or part of a controller, e.g. a separate PCB (printed circuit board) or part of such PCB. In case the control device is designed and set up as a modular device (e.g. a so-called modular PLC (programmable logic controller)), the IO-component can be realized a separate a module that is detachably connected or connectable to other components of the modular controller.

In case of realizing the IO-component as hardware component, the middleware component can e.g. be designed and set up as an internal data bus of the control device or e.g. as a so-called backplane bus or backplane (e.g. in case, the control device is designed and set up as a modular device).

The IO-component can also be realized as a software-component or a software application. The control device can in this case e.g. be designed and set up as a so-called software controller or a modular software controller as described above. Such software controller can e.g. comprise a control software application, e.g. for real-time-control of the device or system, and a middleware software application, in addition to the IO-component.In this case, the control device can be designed and set up in a way that the control software application and the IO-component are connected via the middleware software application.

The IO-component can e.g. be designed and set up as an OPC-UA-module, a webserver-module, an OPC-server-module, an OPC-client-module, an Ethernet-communication-module, an internet-access-module and/or a fieldbus-module (e.g. a Profinet-module, a Modbus-module, an EtherCat-module or the like). The IO-component can e.g. be further designed and set up as an OPC-UA-application, a webserver-application, an OPC-server-application, an OPC-client-application, an Ethernet-communication-application, an internet-access-application and/or a fieldbus-application (e.g. a Profinet-application, a Modbus-application, an EtherCat-application or the like).

Additional comment: the abbreviation "IO" or "I/O", used in the present description as an abbreviation for "input-output", can be spelled as IO or I/O. Both spellings are used synonymously within the present description.

The control device is designed for controlling a device or system. Such device or system can, for example, be designed and set up as a machine, a device, a robot, a production system or similar, or also comprise such parts as components. Such a device or system may, for example, comprise one or more components, drives, sensors, machines, devices, communication devices or similar.

In general, real-time refers to the operation of a computer system in which programs for processing data are constantly ready for operation in such a way that the processing results are available within a specified period of time. Depending on the application, the data can be generated according to a random distribution or at predetermined times.

A real-time operating system is an operating system for a data processing device that is designed and set up in such a way that requests from a user program or a signal arriving via a hardware interface can be processed securely within a predetermined or definable period of time. It is essential that there exists such a guaranteed time period. How long this time span is, is not essential for the fact that a particular operating system is a real-time operating system.

A real-time operating system can, for example, be designed and set up as a real-time operating system within the meaning of DIN 44300.

The real-time communication can, for example, be designed and set up in such a way that a predefined or specifiable real-time requirement is met. Such real-time requirements can, for example, relate to a transmission bandwidth to be guaranteed or a transmission latency time to be complied with. The real-time communication can, for example, be designed and set up as a real-time Ethernet communication, for example according to the TSN standard. Furthermore, the real-time communication can be designed and set up in accordance with a real-time-capable fieldbus standard.

In a preferred embodiment, the IO-component can comprise an IO-abstraction-module and a connectivity-module.

Such connectivity-module can e.g. be designed and set up for handling the communication via the communication link. It can be e.g. designed and set up for receiving data via the communication link and forwarding the received data to the IO-abstraction-module. Additionally, the connectivity-module can be designed and set up for receiving data from the IO-abstraction-component and sending it via the communication link.

The IO-abstraction-module can e.g. be designed and set up for the conversion of IO control data into middleware variables and to transfer these middleware variables to the middleware component. Additionally, the IO-abstraction-module can e.g. be designed and set up for receiving middleware variables from the middleware component and convert them into corresponding IO control data. The IO-abstraction-module can e.g. be further designed and set up for the conversion of IO control data, received from the connectivity-module, into middleware variables and to transfer these middleware variables to the middleware component. Additionally, the IO-abstraction-module can e.g. be designed and set up for receiving middleware variables from the middleware component, convert them into corresponding IO control data and transfer them to the connectivity-module.

Additionally, the IO-abstraction-module can be designed and set up to decouple the communication via the communication link, e.g. handled by the connectivity-module, from the communication to the middleware and/or inside the control device, e.g. with other modules of the control device, e.g. via the middleware.

Such decoupling can e.g. be designed and set up in a way, e.g. among others, that possible data provisioning cycles for exchanging data with the middleware and/or inside the control device, e.g. with other modules of the control device, e.g. via the middleware, are independent and/or decoupled from data provisioning cycles of the communication link or the communication via the communication link.

Such communication to the middleware, e.g. such data provisioning cycles for exchanging data with the middleware and/or inside the control device, e.g. with other modules of the control device, e.g. via the middleware, can be configured, e.g. by a configuration interface of the IO-component and/or according to the present description. Corresponding parameters can be set and changed, e.g. according to the present description.

An IO-abstraction-module according to the present description can, in a procedural language, be also named or seen as an "IO abstraction layer".

Such IO abstraction layer can be viewed as a bridge in the system of the control device between a communication link, e.g. a fieldbus or ethernet (real world hardware), and the middleware component (data exchange layer of the control device). It enables data to be transformed and represented in a normalized, standardized, logically structured and/or contextualized form before being transferred.

A method using a software development kit (SDK) according to the present description, comprising software elements for creating an IO-component according to the present description, can provide a good way to create, access, set-up and/or parameterize the I/O abstraction layer. Such an SDK can be designed and set up as a library, which, e.g. when executed on a computer or used by a software developer, creates an IO-component according to the present description for integration into the control device and communicatively coupling the control device via a communication link (e.g. a fieldbus) to an external device and/or a network.

To use the IO abstraction layer, e.g. an IO component according to the present description is required. To create, set up, parameterize and/or use such a custom I/O component using an SDK as described above and elsewhere in this description, several steps need to be performed, which also are described elsewhere in this description.

Any IO component needs to be created, set-up and/or configured to function properly with the IO abstraction layer. Further details about creating, setting up and/or configuring of an IO component according to the present description can be found elsewhere in the present description.

The input and/or output of the IO control data can be designed and set up in particular as part of the control of the device or system. The IO-component receives data from the machine or system as part of the control system, e.g. corresponding sensor, measurement, status, alarm and/or diagnostic data, and sends control data and/or other data used or usable as part of the control system to the machine or system.

Input of IO control data is data that is transferred from the device or system to the IO-component, e.g. as part of the control of the device or system and also for setting up (e.g. engineering), monitoring and checking, repairing the automation system including the control device and device or system. Such input data is generally used to input sensor and other data from the device or system to the controller for enabling the control device to control the device or system.

Output data is data that is transferred from the IO-component or control device to the device or system e.g. as part of the control of the device or system and also for setting up (e.g. engineering), monitoring and checking, repairing the automation system including the control device and device or system. Such output data is generally used for controlling or operating the device or system.

IO control data could also be named as "control relevant IO data". IO control data is data exchanged for controlling the device or system or as part of the control of the device or system (e.g. for controlling the device or system, connection to HMI, tracking/tracing, collecting data in a historian, MES (manufacturing execution system), data storage, analytics, quality control, ....).

The input and/or output data relating to the device can, for example, be data that comes from a machine or system as part of its control (sensor data, machine status data or characteristic data) or is sent to it (control data for actuators or for setting or adjusting device parameters).

If the control device is designed and set up as a programmable logic controller (a hardware PLC or a software or virtual PLC), for example, input and/or output data can be stored in a so-called process image of the programmable logic controller. Such process image can e.g. be part of an IO-component according to the present invention.

In a preferred embodiment, the IO-component has access to a communication data storage device or process image storage device of the control device for storing IO data and/or IO control data received via the communication link and/or for reading IO data and/or IO control data for transmission via the communication link.

Received IO control data and/or other IO data can be stored in such a communication data storage device or process image. IO control data and/or other IO data to be sent via the communication link can also be stored in such a communication data storage device or process image.

Such communication data storage device or process image computer storage can be part of the IO-component, a part of a communication link driver, a part of a protocol stack for the communication protocol, an input/output data buffer and/or a process image for incoming and outgoing data from or to the device or system. Such communication data storage device or process image computer storage can also be part of a connectivity module the IO-component.

A communication link can, for example, be designed and set up as a so-called field bus, an Ethernet, a OPC-UA-communication-link or the like - or can also have a proprietary and/or internal communication data format and/or communication protocol.

A communication link is a medium through which data is transmitted between different components of a control system. It can be wired or wireless and supports various communication protocols such as PROFINET, PROFIBUS, EtherCAT, Modbus, etc. The communication link enables the exchange of IO control data between the control device and external systems or devices. The IO-component interfaces with this communication link to receive input data from sensors or other input devices and send output commands to actuators or other output devices. By converting the data into middleware variables that are independent of the communication protocol, the IO-component ensures seamless integration and interoperability within the control system.

A communication link can e.g. be designed and set up as a Ethernet connection, a Wireless communication connection, a fieldbus, a fiber optic link or a cellular network.

A communication protocol is a set of rules and standards that define how data is transmitted and received over a communication link. It ensures that different devices can communicate effectively by providing guidelines for data formatting, error handling, synchronization, and addressing. In industrial automation systems, common communication protocols include PROFINET, EtherCAT, Modbus, etc. An IO-component according to the present invention interfaces with these protocols to facilitate the exchange of IO control data between the control device and external systems or devices. By converting this data from and into middleware variables that are independent of the communication protocol, the IO-component ensures consistent data processing within the control system.

The access to a communication link using a corresponding communication protocol by using a so called "communication link driver", "communication stack" or "protocol stack". Such a communication link driver, communication stack or protocol stack refers to a layered architecture model representing different levels functionalities involved establishing maintaining communication between devices systems. A "communication link driver" and/or "protocol stack" refers to a set of network protocol layers that work together to manage data exchange between devices e.g. in an industrial environment. Each layer in the stack has a specific function and communicates with the layers directly above and below it. The goal of a protocol stack is to ensure reliable, efficient, and secure communication.

A middleware component can act as an intermediary layer that facilitates communication and data management between different software applications and/or hardware components or modules within a control device. The middleware component according to the present description abstracts the complexities of various communication protocols and provides standardized interfaces for data exchange. Such a middleware component receives middleware variables from the IO-component after they have been converted from raw IO control data. It then makes this standardized data available to other software applications or components within the control device for further processing or decision-making.

A middleware component according to the present description ensures that data is consistently formatted and easily accessible, regardless of the underlying communication protocols used by various external devices or systems. This standardization simplifies the integration of diverse components and enhances the overall flexibility and scalability of the control device. Additionally, the middleware component can be designed and set up to also handle diagnostic information and alarm events, providing a centralized platform for controlling, monitoring and managing connected devices.

A middleware component can e.g. be designed and set up for communication between different components or modules of the control device, or example for the transmission or exchange of data, tags, alarms, diagnostic data, events, skills, process objects, middleware variables, middleware diagnostic information, middleware event information, or the like.

Data can be converted via the IO-component in middleware data, which can e.g. be designed and set up according to the present description. Such middleware data can e.g. be designed and set up in a way, that the middleware data is independent of specific or used communication protocol. Such middleware data can e.g. be defined on a data-specific basis. This means, that different data categories can each have their own middleware data. In a preferred embodiment, all such middleware data can be designed and set up as being independent of specific or used communication protocol.

The format of data communicated by the middleware can be designed and set up to be parameterizable. In particular, respective data-specific middleware data formats can be designed and set up to be parameterizable. Such parametrization can e.g. be performed by a middleware management system, an (automation) engineering system, a configuration manager component, e.g. according to the present description, or the like.

The middleware component can be designed and set up e.g. as a hardware communication bus or a backplane bus. The middleware component can be also designed and set up e.g. as a software application or software module. It can e.g. be designed and set up as Data Distribution Service (DDS), OPC UA Middleware, Message Queuing Middleware (e.g. MQTT), an Enterprise Service Bus (ESB), Cloud-based Middleware or PLC backplane bus.

Especially in the case of the control device being designed and set up as a hardware programmable logic controller (PLC), the middleware component might be designed and set up as a hardware communication bus or a backplane bus.

In case the control device is designed and set up in software, e.g. as a so called soft-PLC or virtual PLC, the middleware component can be preferably designed and set up as a software application, software module or software program.

Middleware variables according to the present description are standardized and/or logical structured representations of raw IO control data that has been converted by the IO-component in a middleware format that is independent of any specific communication protocol. These variables are then transmitted to the middleware component within the control device for further processing, use or decision-making by other software applications or components. In this way, middleware variables ensure consistent data representation across different parts of the control device regardless of the underlying communication protocols used by various external devices or systems. By standardizing data formats, middleware variables simplify the development and maintenance of control applications, reducing the complexity associated with handling diverse data sources.

Middleware variables can e.g. be defined for sensor data, actuator related data (e.g. commands) and/or so called "tags". In the field of industrial automation, a Tag refers to symbolic name identifier representing specific data point or variable within an automation system. Tags are typically associated with sensors, actuators and/or other field devices providing means for accessing and/or manipulating their values through Human-Machine Interfaces HMIs, Supervisory Control Data Acquisition SCADA systems, Distributed Control Systems DCS and/or Programmable Logic Controllers PLCs.

A middleware variable according to the present description may e.g. contain a definition of one or more tags.

A a middleware variable according to the present description may e.g. include one or more of the following data:
- Name: A middleware variable can be assigned a unique name that identifies a particular data point. This name can e.g. be used to reference the tag within the system.
- Address: Each middleware variable can be associated with a specific address or location in the system, e.g. a memory address in a PLC (Programmable Logic Controller) or a register in a sensor.
- Data Type: middleware variables can represent different types of data, such as e.g.
   integers, floating-point numbers, strings, or Boolean values. The data type defines the kind of information the tag holds.
- Value: A middleware variable holds the current value of the data point it represents. This value can be read from or written to the system. For example, a middleware variable might hold the temperature reading from a sensor or the on/off status of a motor.
- Metadata: middleware variables can include additional information, such as units of measurement (e.g. Celsius, volts), scaling factors, descriptions, and timestamps (e.g. of the last update).

The IO-component is designed and set up for converting IO control data received via the communication link into middleware variables corresponding to the IO control data, and subsequently for transmitting these middleware variables to the middleware component, whereas the IO-component is designed and set up for converting the IO control data into the middleware variables in such a way,
- that the middleware variables are independent of the communication protocol,
- and that, as part of the conversion of the IO control data into the protocol-independent format of the middleware variables, a normalization, standardization, logical structuring and/or contextualization of the IO control data takes place.

And in addition to normalization, standardization, logical structuring and/or contextualization, further conversion steps can be used for converting IO control data to middleware variables.

The conversion of a specific IO control data element into the corresponding middleware variable comprises a normalization, standardization, logical structuring and/or contextualization step. Such conversion can be performed for one data element of the IO control data, for multiple data elements of the IO control data or for all data elements of the IO control data.

The IO-component, middleware component and/or control device can be further designed and set up for converting IO control data into middleware variables for transmission to other modules or software components of the control device via the middleware component.

Furthermore, the IO-component can be also designed and set up to convert the middleware variables into IO control data for sending this IO control data via the communication link. In a preferred embodiment, the IO-component can be designed and set up for converting middleware variables received from the middleware component into IO control data corresponding to the middleware variables, and subsequently for transmitting this IO control data via the communication link, e.g. to the device or system.

In particular, the IO control data to be sent or sent can be intended for controlling the device or system, whereby the IO-component is designed and set up for conversion into the IO control data in such a way that the IO control data is adapted to be transferred via the communication link using the communication protocol and/or that the machine or system is or can be controlled by means of the IO control data.

In particular, the IO-component can be designed and set up to convert the protocol-independent format of the middleware variables back into the format of the IO control data for transmission via the communication link.

In particular, the IO-component can also be designed and set up to convert standardized, logically structured and/or contextualized middleware variables back into IO control data to be sent or transmitted via the communication link.

For this kind of data transfer from the IO-component via the communication link, reverse transformation or reverse conversion rules and/or processes compared to the transfer from IO control data to middleware variables can be used. Such reverse transformation or reverse conversion can also be parameterized according to the present description.

A data conversion as described in the previous paragraphs can e.g. be performed by a IO-abstraction-module according to the present description, whereas the IO-abstraction-module is a part of the IO-component.

In a preferred embodiment, data generated by the control of the device or system by the control device can be collected by sensors and provisioned via the communication link to the IO-component. The collected data is then available and/or stored in a process image input computer storage as input data items or IO control data. This data is mapped to middleware variables and provided to other modules or software applications of the control device via the middleware component.

Middleware variables provided by other modules or software applications of the control device can be consumed and converted by the IO-component and stored in a process image output computer storage as output data items or IO control data. These data items can then be provisioned via the communication link e.g. to the device or system.

A communication link driver and/or a protocol stack can, for example, be part of the IO-component or be provided/implemented separately in the control device.

A communication link driver and/or a protocol stack as described in the previous paragraphs can e.g. be part of a connectivity-module according to the present description, whereas the connectivity-module can be a part of the IO-component.

A communication data storage device or a process image computer storage as described in the previous paragraphs can e.g. be part of a connectivity-module according to the present description, whereas the connectivity-module can be a part of the IO-component.

That the middleware variables are independent of the communication protocol can be designed and set up in a way that the middleware variables do not contain any communication protocol-specific data, details and/or peculiarities or parameters. The data format, data and/or data value of a specific middleware variable is for example always the same, regardless of which communication protocol was used to transmit it to the controller, which sensor recorded it, which actuator it is transmitted to and/or which software application generated it. If, for example a specific Temperature is measured, the middleware variable contains always the same value and e.g. physical measurement unit (e.g. 20 degrees Celsius), regardless of which communication protocol was used to transmit it to the controller, which sensor recorded it, which actuator it is transmitted to and/or which software application generated it.

Such conversion of data e.g. in protocol independent data is often referred to as "variable abstraction".

A normalization in general, in particular a normalization of IO data according to the present description, e.g. IO control data, IO diagnostic data and/or IO alarm data, can be designed and set up as a shifting and/or scaling of data with the goal, that the normalized data lies in a given value range, e.g. in a range between 0 and 1. For normalization, also non-linear characteristics can be taken into account, e.g. when taking into account a non-linear sensor-characteristic for transferring sensor data in corresponding data in physical units.

Parameters for such a normalization step can e.g. be a minimum allowed value for the normalized data and a maximum allowed value for the normalized data. Additional parameters can e.g. be a minimum possible value and a maximum possible value of the data to be normalized.

In general, "normalization" refers to a process or technique used to standardize data across different sources, ensuring consistency, comparability, and/or accuracy. This concept is crucial for effective data analysis, integration, and decision-making in complex industrial systems.

Normalization can comprise transforming raw data into a standardized format. This can include converting units of measurement, scaling values, and aligning data formats to a common standard. For example, temperature readings might be converted from Fahrenheit to Celsius to maintain consistency across the system. Normalization can also comprise scaling numerical data to a specific range, typically between 0 and 1. This is particularly useful when combining data from different sensors or systems that operate on varying scales. For instance, sensor readings might be scaled to a common range to facilitate comparison and analysis.

In the context of databases, normalization refers to organizing data to reduce redundancy and improve data integrity. This involves structuring the database into tables and relationships based on rules that minimize duplication and ensure consistency. For example, in a manufacturing database, product details might be normalized to separate tables for product specifications, suppliers, and orders. Normalization can also involve cleaning data to remove inconsistencies, errors, and outliers. This ensures that the data is accurate and reliable for analysis. For instance, sensor data might be cleaned to remove spikes or anomalies that could skew analysis results.

A contextualization of data in general, in particular a contextualization of IO data according to the present description, e.g. IO control data, IO diagnostic data and/or IO alarm data, can be designed and set up as a process of enriching the data, e.g. IO control data, with additional information to provide a meaningful context, e.g. by using metainformation or metadata. This process enhances the data's value, making it better comparable and/or more useful for analysis, decision-making, and operational improvements. Contextualization ensures that data is not just a series of isolated points but is connected to the broader operational environment, enabling deeper insights and more effective actions.

Contextualization can comprise attaching metadata to raw data. Metadata can include information such as timestamps, location, measurement conditions, equipment identifiers, process conditions, source information, physical measurement units and/or other relevant details. For instance, a temperature reading from a sensor can be contextualized with the time it was recorded, the specific equipment it was measuring, and/or the operating conditions at that time. By contextualizing data, it additionally can become possible to correlate different data points to uncover patterns, trends, and relationships. For example, data can also be contextualized with maintenance information, shift information, equipment usage, operating conditions, and/or environmental conditions e.g. to identify factors affecting production efficiency. Contextualization can also help in understanding the operational context of data, e.g. by contextualizing it with an information about a part of a production facility a particular sensor reading pertains to, and/or about a specific batch of products being produced.

Metadata for contextualizing data can also comprise a data type (Boolean, Integer8, Integer16, Integer32, Float), a name, a direction, a string size, an array-information (e.g. whether data is structured as an array and/or an array size), a time stamp (e.g. of last update of the value), a physical unit and/or the like.

Metadata for contextualizing data can also be a quality information or quality code. Such quality information or code can e.g. be related to a quality of the data and/or can comprise the following values:
- good: data is valid,
- bad: data is invalid, (e.g. nonspecific, not connected, no communication, out of service)
- uncertain: data is uncertain, (e.g. Initial value set for the data, substitute value set for the data, last usable value of the data).

In the following, a detailed explanation of examples of Metadata and/or Parameters usable to transform raw data into contextualized data is provided.

Metadata and/or corresponding parameters play a crucial role for transferring or converting IO control data, IO diagnostic data and/or IO alarm data into corresponding protocol independent middleware variables, middleware diagnostic information and/or middleware event information. Metadata provides necessary information to accurately convert raw data into contextualized and/or protocol-independent data. Such transfer or conversion can be e.g. realized by setting up and/or a corresponding transformation logic of the IO-component.Here's a detailed explanation of examples for such metadata usable in this process:
- Data Type: The data type specifies the format of the raw data (e.g., Integer, Float, Boolean).
- Bit Length: The bit length defines the number of bits used to represent the raw data.
- Byte Offset: The byte offset specifies the starting byte position of the raw data within a data buffer.
- Bit Offset: The bit offset specifies the starting bit position of the raw data within a specific byte.
- Norming Parameters: Norming parameters define how raw data should be standardized into a common format. This might include conversion factors and offset values. For example, converting temperature data from Fahrenheit to Celsius might involve subtracting 32 and multiplying by 5/9.
- Scaling Parameters: Scaling parameters define how the magnitude of raw data should be adjusted to fit a desired range. This might include scaling factors and offset values.
- Initial Value: The initial value specifies a default value for the data when no valid data has been received.
- Substitute Value: The substitute value specifies a value to be used when the raw data is invalid or unavailable.
- Unit: The unit or physical unit specifies a measurement unit of the data (e.g., Celsius, Fahrenheit, Percentage).
- Direction: The direction specifies whether the data is incoming (from the fieldbus to the middleware) or outgoing (from the middleware to the fieldbus).

Examples for Metadata and/or Parameter Usage for transferring or converting IO control data, IO diagnostic data and/or IO alarm data into corresponding protocol independent middleware variables, middleware diagnostic information and/or middleware event information e.g. by a Transformation Logic as named above, are:
- Data Extraction: The transformation logic uses the byte offset and bit offset metadata to locate and extract the raw data from the data buffer. This ensures that the correct portion of the raw data buffer is processed.
- Data Norming: The transformation logic applies norming parameters to convert the raw data into a standardized format and/or a logic structure. This might involve using conversion factors and offset values specified in the metadata. For example, converting raw temperature data from vendor-specific units to Celsius involves applying the appropriate conversion factors.
- Data Scaling: The transformation logic applies scaling parameters to adjust the magnitude of the raw data to fit the desired range. This ensures that the data values are within an expected range for the SDC system. For example, scaling a sensor reading to a percentage involves dividing by the maximum value and multiplying by 100.
- Data Type Conversion: The transformation logic converts the data type of the raw data to match the requirements of the SDC system. This ensures compatibility with the data types expected by the control logic and other system components. For example, converting integer data to floating-point data involves applying the appropriate conversion functions.
- Diagnostics and Alarms: The transformation logic uses diagnostic and alarm metadata to monitor the operational states of the IO peripherals and handle errors. The Diagnostic Transformation Engine converts protocol-specific diagnostics into a generic format, while the Alarm Transformation Engine transforms protocol-specific alarms into protocol-independent events. This ensures consistent and standardized monitoring and alarm handling.
- Data Provisioning: The transformed data, along with its metadata, is provisioned to the northbound interface. This interface makes the contextualized data available to the control device system, where it can be used by control logic, monitoring tools, and other applications.

In summary, metadata plays a vital role in the transformation logic by providing the necessary information to accurately convert raw data into contextualized data. It ensures accuracy, consistency, flexibility, standardization, error handling, and interoperability, making the transformation logic effective and efficient.

In an additional preferred embodiment, the IO-component can be designed and set up for converting the IO data according to the present description, e.g. IO control data, IO diagnostic data and/or IO alarm data, can be designed and set up into the middleware variables in such a way, that as part of the conversion of the IO data into protocol-independent middleware variables, middleware diagnostic information and/or middleware event information, a standardization of the IO control data takes place.

In an additional preferred embodiment, the IO-component can be designed and set up for converting IO data according to the present description into the middleware information or data according to the present description in such a way, that as part of the conversion of the IO data according to the present description into protocol-independent middleware variables, middleware diagnostic information and/or middleware event information, a standardization, a normalization, a logical structuring and/or a contextualization of the IO data takes place.

Such standardization can be e.g. designed and set up as transforming IO control data into a given standard physical unit, as transforming IO control data into a percentage of a given parameter and/or assigning incoming IO control data to standard data categories, or classes or a given hierarchy. An example for assigning IO control data so a standard data category can e.g. if an incoming data value is assigned to one of the categories "OK", "too low" and "too high".

Also converting IO control data to a special, set, preset, defined or given data type (like: Integer8, Float32, Float64, Boolean, String, ...) can be a way of standardizing and/or normalizing IO control data for converting it to protocol-independent middleware variables.

A logical structuring of data in general, in particular a logical structuring of IO data according to the present description, e.g. IO control data, IO diagnostic data and/or IO alarm data, can be designed and set up as organizing and formatting data into standardized, coherent and/or meaningful units that can be easily interpreted and utilized by various applications. This can involve converting raw IO data, received via the communication link, into high-level, e.g. also contextually enriched, entities that e.g. represent real-world concepts or objects.

A part of logical structuring can be data grouping, where raw data points that are related or need to be processed together are aggregated into a single logical entity. This aggregation can involve hierarchical organization to reflect relationships between different data points. For instance, multiple sensor readings from a single device can be grouped into a structured format, and a machine's operational status might include sub-entities for temperature, pressure, and speed.

Contextual enrichment can be another component of logical structuring. This step can involve adding metadata to raw data to provide context, such as timestamps, units of measurement, source identifiers, and status flags. Additionally, semantic labels can be assigned to raw data values to describe their purpose or origin. For example, a raw value 0x1A2B might be labeled as "Temperature Sensor Reading."

Data formatting can be also a part in logical structuring. This can include standardizing data into consistent formats and/or units to ensure uniformity across different systems and applications. For example, all temperature readings might be converted to degrees Celsius. Type conversion is performed to convert raw data into appropriate data types (e.g., integers, floats, strings) based on its intended use.

Formatting can also be designed and set up in a way that the data is converted into a specific data format or file format, is arranged in a specific order and/or has a specific text formatting.

Entity definition can be a further aspect of logical structuring. Logical entities are defined structures that represent meaningful data units, encapsulating multiple related data points and their context. For example, a "Temperature Reading" entity might include fields for the temperature value, unit, timestamp, and sensor ID. More complex logical entities can be created by combining simpler entities. For instance, a "Machine Status" entity might include nested entities for various sensor readings and operational parameters.

Data buffers can be used to combine logical entities for efficient access and processing by applications. These buffers can e.g. ensure that related data is transmitted and stored together. In cases, in which a provisioning cycle of logical entities is decoupled from a communication cycle of a communication link, this can allow for independent and configurable update rates.

An example for converting IO data according to the present description being transmitted to an IO-component according to the present description via a communication link according to the present description to middleware data or middleware information according to the present description is illustrated in the following with raw data from sensors. The following example is an example for converting IO control data into middleware variables according to the present description.

Suppose IO control data values from a temperature sensor (ID: 0x1A2B) and a pressure sensor (ID: 0x0F3C) are received by an IO component according to the present description, together with a special hexadecimal code for the sensors' identification (Sensor-ID, in brackets) and a timestamp (2023-10-01T12:00:00Z) for these measurements, via a communication link according to the present description. This IO control data is arranged in a communication link specific way, arrangement and order in one or more communication time frames of the communication link. This arrangement, format and representation of the data in the timeframe is specific for the communication link and/or the communication protocol.

Converting these IO control data elements into corresponding middleware variables could e.g. involve:
- Data extraction: e.g. extracting the different data elements (sensor values, sensor ID, timestamp) from the communication data frames transmitted via the communication link,
- Logical structuring: e.g. aggregating these raw sensor readings into one or more single entity, and a specific order and text format,
- Contextualizing: e.g. adding metadata such as units and source identifiers and labeling the raw values with semantic names,
- Standardizing: e.g. converting hexadecimal values to decimal,
- Normalization: conversion of the received sensor data into corresponding, standardized units (e.g., Celsius for temperature and Pascal for pressure).

The converted data might look like this:

| | | | |
|---|---|---|---|
| MachineStatus: | | | |
| | Timestamp: "2023-10-01T12:00:00Z" | | |
| | Sensors: | | |
| | | Temperature: | |
| | | | Value: 66.99 |
| | | | Unit: "°C" |
| | | | SensorID: "TempSensor01" |
| | | Pressure: | |
| | | | Value: 3900 |
| | | | Unit: "Pa" |
| | | | SensorID: "PressureSensor01" |

This converted data can then e.g. be stored as one or more middleware variables and/or transmitted to a middleware component according to the present description by the IO-component as one or more middleware variables.

A conversion of IO diagnostic data to corresponding middleware diagnostic information and/or IO alarm data to corresponding middleware event information can be performed in a similar way.

For the sake of clarity, it is repeated here that the term "IO data" is used in this description for summarizing multiple or all data categories transmitted or to be transmitted via the communication link. IO data can comprise for example:
- IO control data: data communicated via the communication link regarding the control of the device or system by the control device,
- IO diagnostic data: diagnostic data communicated via the communication link regarding the control device or the system or device,
- IO alarm data: data communicated via the communication link regarding alarms, e.g. by the control device or the system or device.

For the sake of clarity, it is repeated here that the terms "middleware data" and "middleware information" are used in this description for summarizing multiple or all data categories transmitted or to be transmitted via the middleware component. Middleware data can comprise for example: middleware variables according to the present description, middleware diagnostic information according to the present description and/or middleware event information according to the present description.

A computer program product can for example be any kind computer software comprising instructions, computer software code, computer software instructions, program instructions and/or program code. A computer program product can for example comprise so-called source code and/or comprise so-called "binaries", whereas binaries can be designed and set up as the code which results from a compilation of corresponding source code.

The computer program product can be i.e. any implementation of a computer software stored on any kind of electronic device or other device designed and set up or storing computer software, computer software code and/or computer software instructions. Devices for storing a computer program product can be for example electronic memory, for example a so-called read-only memory (ROM), a so-called random-access memory (RAM) and/or other comparable electronic memories like EPROMs or the like. Such memories can be semiconductor-based or is a magnetic device like a hard disk or other memories for storing electronic data known from the prior art.

An automation engineering system is a system or software with which control devices for controlling machines or systems are programmed and/or set up. In particular, for example, automation engineering systems are used to create appropriate control programs for a control device, to set up appropriate communication links for communication within the control device and/or for communication with corresponding field devices, drives and/or sensors, and also to set up and/or parameterize the control device itself. In the case of a control device that includes several components, for example, the individual components are set up and/or parameterized by means of a corresponding automation engineering system, and their connection is also set up and parameterized.

For example, an automation engineering system may be designed and set up as a computer system with appropriate software that is trained and set up to generate automation engineering data for a specific machine or production plant. Such automation engineering data is, for example, data as it is created and/or intended for the automation and/or control of the production plant or machine. This includes, for example, using such an automation engineering system to create appropriate control programs and parameterize the components of the production plant or machine and also the corresponding control systems accordingly. An example of such an engineering system is, for example, a computer system on which the software available on the market with the product name "TIA-Portal" or "Step 7" is installed.

Data used by such engineering systems for programming and/or setting up control devices can include a wide variety of engineering elements, such as one or more control programs, variables, so-called "tags", program modules, function modules, data modules, program blocks, program organizational units, data types used, ID information for components, configuration data, call information for program elements, comments, control programs and/or comparable engineering elements.

In the context of the present description, an edge device is understood to be a communication device, computer device and/or control device that is communicatively connected both to an automation system (e.g. a control device, a control system and/or a processing system according to the present description) and to a further communication network that does not belong to the automation system. Such a further communication network not belonging to the automation system can be, for example, a cloud, a company communication system or network (e.g. a company intranet) or a public communication network (e.g. an Internet, a WLAN, an Ethernet, a mobile phone network, a fixed network (e.g. a DSL network) or similar. The edge device or edge device can also be part of the automation system and, for example, act as a kind of gateway to establish a connection to communication systems outside the automation system.

An edge device can, for example, comprise an application for controlling devices or systems. For example, such an application can be designed and set up as an application with the functionality of a programmable logic controller or a control device. The EDGE device can, for example, be connected to another control device of a device or system or also directly to a device or system to be controlled. Furthermore, the EDGE device can be designed and set up in such a way that it is also connected to a data network or a cloud or is designed and set up to connect to a corresponding data network or a corresponding cloud.

An edge device can also be designed and set up to implement additional functionalities in connection with the control of, for example, a machine, system or component - or parts thereof. Such functionalities can be, for example
- Collecting data and transferring it to the cloud and/or corresponding pre-processing, compression and/or analysis of such data,
- analyzing data, e.g. with AI methods, e.g. with neural networks or corresponding ML models. For example, an ML model can be installed or implemented on the edge device for this purpose,
- management or execution of training of a neural network or ML model.

Such training itself can take place at least partially on the edge device itself, or at least in a cloud. If training takes place in a cloud, the edge device can, for example, be designed to download the trained neural network or ML model and subsequently use it.

A data processing device and/or computing device can, for example, be designed and set up as a mobile or stationary device. The data processing device can, for example, be designed and set up as a computer, a personal computer, a workstation, a smartphone, a tablet computer, a computer network, a cloud, a control device, a controller, a programmable logic controller, an edge device or comparable devices or equipment.

Furthermore, the data processing device can also be designed and set up as a logical and/or functional unit within a larger overall system (e.g. as a "data processing device app" in a cloud or a virtual control device (e.g. a so-called vPLC or soft PLC)).

The data processing device can, for example, be designed and set up as a computer, an EDGE device, a PLC, a virtual PLC, one or more modules of a PLC or virtual PLC, a control device, a cloud, an automation server, a control application in a cloud or as a comparable computing device or comprise such components. The computing device can also be designed and set up as a system comprising several of the aforementioned components, which are or can be communicatively coupled.

In a preferred embodiment, the IO-component is designed and set up
- for converting middleware variables into IO control data to be sent via the communication link,
- and subsequently for outputting this IO control data via the communication link,
whereas the middleware variables are independent of the communication protocol.

This preferred embodiment specifies that the IO-component can also convert middleware variables back into IO control data to be sent via the communication link. This converted control data is then outputted through the communication link while maintaining the independence of the middleware variables' format from the communication protocol.

The advantage of this preferred embodiment is that the IO-component can perform or support a full forward and backwards communication between the control device and the system or device controlled or to be controlled.

The process in this preferred embodiment, for which execution the IO-component is designed and set up for, can involve several steps.

First, the IO-component converts middleware variables, which are protocol-independent and e.g. have been normalized standardized, logically structured and/or contextualized, back into IO control data. This conversion translates the standardized format into a format compatible with the specific communication protocol used by the external device or system, ensuring that the data can be correctly interpreted and utilized by the receiving device.

The middleware variables can e.g. comprise normalized, standardized, logically structured and/or contextualized values or can consist of such normalized, standardized, logically structured and/or contextualized values.

Next, the converted IO control data can be prepared for transmission. This can involve e.g. a packaging of the data according to the requirements of the communication protocol. This may include adding headers, footers, and other metadata necessary for proper transmission and reception. Error-checking mechanisms such as checksums or cyclic redundancy checks (CRC) may also be added to ensure data integrity during transmission.

This IO control data is then output or transmitted via the communication link, which can e.g. be the physical or wireless medium through which the data is sent. Examples of communication links include Ethernet cables, fiber optics, and/or wireless networks. The specific communication protocol (e.g., PROFINET, EtherCAT, Modbus, Ethernet, Internet, any mobile communication protocol) dictates how the data is formatted, transmitted, and received over the communication link, ensuring that both the sending and receiving devices understand and correctly interpret the data.

Outputting this IO control data via the communication link can be designed and set up in a way, that the IO control data is output from the control device via the communication link.

The outputting of the IO control data, e.g. by the control device, can e.g. be performed by e.g. and a corresponding communication interface of the control device and/or a corresponding communication link driver and/or using a protocol stack and/or the aforementioned communication data storage device (e.g. input/output buffer or process images or similar)

The IO-component can use or access e.g. network interfaces and/or drivers of the control device to physically transmit the packaged IO control data over the medium. Such network interfaces or drivers can be part of the IO-component or separate devices of the control device.

The device or system then can use the received control data to perform specific actions or adjustments as dictated by the control logic. If applicable, a feedback loop may be involved. The receiving device may send an acknowledgment back to the IO-component to confirm successful receipt and execution of the control commands. Additionally, the receiving device may send status updates or diagnostic information back to the IO-component, which can be converted into middleware diagnostic information for further processing.

The IO-component can further be designed and set up, that it can be parameterized with regard to the normalization standardization, logical structuring and/or contextualization of the IO control data, and the IO-component can be furthermore designed and set up in such a way that this parameterization can be set up and changed,
in particular in such a way that this parameterization can be set up and changed via a configuration manager component of the control device.

The IO-component according to the present invention can be designed to be configurable, allowing it to adapt to different middleware variables and other middleware data, communication protocols and data formats. This flexibility is achieved through parameterization, which enables adjustments to the component's behavior based on specific operational requirements. Additionally, the IO-component can include a state machine that defines various operating states (e.g., Init, Idle, Configuration, Operational, Shutdown) and transitions between them, ensuring predictable and reliable performance.

In the present description, the words "parameterization" and "configuration" are used synonymously.

Parameterization or configuration of the IO-component refers to the process of configuring and customizing the behavior of the IO-component to meet specific requirements. This involves setting various parameters that control how the IO-component processes, converts, and transmits data. These parameters can include settings for normalization, standardization, logically structuring, contextualization, communication protocols, and other operational aspects. By adjusting these parameters, the IO-component can be tailored to function optimally within different environments, communication-protocols and, links as well as different use cases.

In the following, some advantages of parameterization of the IO-component are described. Firstly, parameterization allows the IO-component to be easily adapted to different communication technologies and communication protocols without requiring significant changes to the underlying control logic. This flexibility is crucial for example in industrial environments where multiple communication standards may be in use.

Secondly, users can fine-tune the IO-component's behavior to match specific application requirements. This customization can enhance performance, improve data accuracy, and ensure compatibility with other system components.

Thirdly, parameterization enables the IO-component to be scaled across various applications and systems. By adjusting parameters, the same IO-component can be deployed in different scenarios, reducing the need for multiple specialized components.

Fourthly, proper parameterization can optimize data processing and transmission, reducing system overhead and improving overall performance. This can lead to faster response times and more efficient operation.

Fifthly, parameterized settings can be easily updated or modified as needed, simplifying maintenance and reducing downtime. This is particularly beneficial in dynamic environments where requirements may change frequently.

To design and set up parameterization effectively, for example a configuration interface can be provided to allow users to set and modify parameters easily. This interface can be e.g. a graphical user interface (GUI) or a command-line interface (CLI), depending on the application's complexity and user preferences.

Furthermore, a parametrization or modification of parametrization can be set up by an automation engineering system. Data relevant for such parameterization of the IO-component can be entered, among others, into the automation engineering system e.g. by a user, a simulation, an AI-system and/or automatically, and output by the automation engineering system to the control device, to a configuration manager component of the control device and/or to the IO-component.Such output of the automation engineering system can e.g. be in the form of a data stream, a data file (e.g. a XML-file, YML-file, JSON-file or the like), a database and/or program-code (e.g. a setup-program).

The control device can e.g. include a configuration manager component responsible for managing parameter settings. This component can receive configuration data from users or other system components, like an automation engineering system or software, and apply these settings to the IO-component. Parameters can e.g. be stored in a structured format, such as XML or JSON files, which can be easily read and modified by such configuration manager component. These files can include necessary parameters for normalization, standardization, logical structuring, contextualization, communication protocols, and other operational settings.

The system can e.g. be designed and set up support dynamic updates to parameter settings without requiring a complete system restart. This allows for real-time adjustments and fine-tuning of the IO-component's behavior.

Before applying new parameter settings, the system can e.g. validate them to ensure they are within acceptable ranges and do not conflict with other settings. Testing can also be conducted to verify that the new parameters achieve the desired results.

In summary, parameterization of the IO-component involves configuring various settings to tailor its behavior for specific applications and communication protocols. The advantages of parameterization include flexibility, customization, scalability, efficiency, and ease of maintenance.

Parametrization of the IO-component can e.g. be performed by using corresponding normalization, standardization, logical structuring and/or contextualization parameters and/or information, which e.g. can be stored in the IO-component.

Converting the IO control data into the middleware variables can also be performed by the use of program code for converting IO data into middleware variables. Such program code can also be parameterized by corresponding parameters to set up or change the way, the program code converts the IO data. Such program code can also be parameterized by replacing part of the code or the whole code with new or amended code.

In addition to normalization, standardization, logical structuring and/or contextualization, further conversion steps can also be provided to convert the IO control data into the middleware variables - and these additional conversion steps can also be configurable/parameterizable.

The configuration manager component can be designed and set up as a part, software application, or hard- or software-module of the control device, that manages the parameter settings, updates and/or configurations of the IO-component and/or other components of the control device.

One primary function of such configuration manager component is to provide a centralized interface for configuring, updating, and managing various parameters that dictate how the IO-component and/or other system components operate. The configuration manager allows users to set initial parameters e.g. for the IO-component, including settings for normalization, contextualization, standardization, logical structuring, communication protocols, and/or other operational aspects. Users can also update or modify existing parameters as needed. The configuration manager can store and/or receive parameter settings e.g. in a structured format, such as XML, YML or JSON files, ensuring that all necessary parameters are included and properly formatted.

Such a configuration manager component can e.g. allow users to define how raw data, e.g. transmitted via the communication link, e.g. from various sensors and devices, should be normalized, standardized, logically structured and/or contextualized by the IO-component. This can include e.g. specifying thresholds, conversion rules, and other parameters that determine how raw data is transformed into standardized and/or logically structured middleware variables, diagnostic information, or event information. The ability to customize these settings ensures that the control system can meet specific operational requirements and adapt to different environments or applications.

The configuration manager component can be further designed and set up for supporting dynamic updates to parameter settings without requiring a complete system restart. This allows for real-time adjustments and fine-tuning of the IO-component's behavior.

The configuration manager component can also be designed and set up, that before applying new parameter settings, the configuration manager validates them to ensure they are within acceptable ranges and do not conflict with other settings, helping to prevent errors and/or ensure system stability.

The configuration manager component can provide a unified interface for managing all configuration settings, which can be a graphical user interface (GUI) or a command-line interface (CLI), depending on the application's complexity and user preferences. It can allow users to access and modify configuration settings.

The communication manager component can be also designed and set up to receive configuration data from other system components, like an automation engineering system or software, and apply these settings to the IO-component. Parameters can e.g. be submitted e.g. by such automation engineering system, or another system component, to the configuration manager component in a structured format, such as XML, YML or JSON files, which can be easily read and modified by such configuration manager component. These files can e.g. include necessary parameters for normalization, standardization, contextualization, logical structuring, communication protocols, and other operational settings.

The configuration manager can be designed and set up to communicate with the middleware component of the control device, e.g. to enable that parameter settings and/or changes can be communicated to the IO-component and/or other system components via the middleware. The configuration manager component can also be designed and set up to manage communication with the IO-component and/or other system components, to ensure that parameter updates are correctly applied and reflected in the IO-component.

Additionally, the configuration manager can be designed and set up to configure and/or parameterize how IO diagnostic data is converted into middleware diagnostic information, ensuring that diagnostic data is accurately represented and easily accessible.

It can also be designed and set up to manage the configuration and/or parameterization of IO alarm data conversion into middleware event information, helping in monitoring and responding to alarms effectively.

In summary, the configuration manager component can be a very helpful part of the control device that manages the parameter settings and configurations of the IO-component and other components of the control device. It centralizes tasks such as setting, updating, storing, and validating parameters; supporting dynamic configuration; providing a centralized control interface; managing communication with middleware and IO-components; configuring diagnostic and alarm data; and/or offering comprehensive documentation and example templates.

An IO-component according to the present description can also be designed and set up in a way, that the IO-component comprises a state machine, which is designed and set up such that during operation the IO-component assumes one of a plurality of operating states defined by the state machine.

This embodiment describes an additional feature of the IO-component, specifically the incorporation of a state machine.

The state machine of the IO-component significantly simplifies and enhances the correctness of communication via the communication link by providing a structured and predictable framework for managing the IO-component's operational states. It ensures that the IO-component operates in a predictable manner by defining specific states and transitions, with each state having well-defined actions and responses. This predictability is crucial for maintaining reliable communication, as it ensures that the IO-component will handle data transmission and reception in a controlled way.

Such state machine of the IO-component facilitates decoupling of communication via the communication link from the IO-component's communication with the middleware, as the definition and assumption of the individual operating states can take place in such a way that the communication of the IO-component with the middleware and the communication of the IO-component via the communication link does not interfere with each other.

Such a state machine can further enable and/or ease a decoupling of the IO-component's communication via the communication link from the IO-component's communication to the middleware component.

The state machine can be designed and set up as a computational model realizing a finite number of specific states, and it governs in this case the IO-component's behavior by dictating its operational state at any given time. The IO-component can assume one of several predefined operating states, each representing a specific mode of operation or behavior, such as initialization for example (Init), Idle, Configuration, normal operation (Operational), error handling, diagnostic mode, and/or shutdown. The state machine defines the rules and conditions under which the IO-component transitions from one state to another, triggered by specific events or inputs like receiving data, encountering an error, or completing a task.

Such a state machine ensures that the IO-component operates in a controlled and predictable manner, responding appropriately to various conditions and inputs.

The advantages of incorporating a state machine include predictable behavior, as each state has well-defined actions and responses, reducing the likelihood of unexpected behavior. It also simplifies the design and implementation of complex systems by breaking down the system's behavior into manageable states and transitions, making it easier to design, implement, and debug.

The state machine provides enhanced control over the IO-component's operation, allowing for precise management of different operational modes and ensuring correct responses to various inputs and conditions. Additionally, it improves error handling by defining specific states for error detection, response, and recovery, enhancing the overall reliability and robustness of the system.

Such a state machine could be realized in the following way: One would need to define possible operating states for the IO-component, identify the conditions and events that trigger transitions between states, and implement the state machine logic within the IO-component's software or firmware. This involves coding the rules for state transitions and defining the actions associated with each state.

The state machine of the IO-component can for example include specific states for error detection, handling, and recovery. When an error occurs during communication, the IO-component can transition to an error-handling state where it can take appropriate actions to mitigate the issue, such as retrying the transmission, logging the error, or alerting the system. This structured approach to error management helps maintain the integrity of the communication link and ensures that errors are addressed promptly and effectively.

The state machine can define transitions between operational states based on specific communication events or conditions. For example, when data is received, the IO-component may transition from an idle state to a processing state. Once the data is processed, it may transition to a transmitting state to send a response. These well-defined transitions ensure that the IO-component handles each step of the communication process in an orderly manner, reducing the likelihood of data loss or corruption.

Additionally, the state machine can also help synchronizing communication activities by ensuring that the IO-component is in the correct state before initiating or responding to communication. For instance, before sending data, the IO-component can check if it is in a ready state. If not, it can wait or perform necessary actions to transition to the ready state. This synchronization ensures that data is transmitted and received at appropriate times, enhancing the reliability of the communication link.

In summary, the state machine of the IO-component can make correct communication via the communication link easier by ensuring predictable behavior, providing structured error handling and recovery, synchronizing communication activities, optimizing resource management, and/or allowing for modular design and testing. By defining specific states and transitions for different communication events, the state machine ensures that the IO-component handles data transmission and reception in an orderly and reliable manner.

An IO-component according to the present description can be designed and set up for inputting and/or outputting IO diagnostic data into and/or out of the control device via the communication link using the communication protocol.

The IO component can be furthermore designed and set up for converting IO diagnostic data received via the communication link into middleware diagnostic information assigned to the IO diagnostic data, and subsequently for transmitting this middleware diagnostic information to the middleware,
whereas the middleware diagnostic information is independent of the communication protocol.

In this embodiment, the IO-component is also designed to handle IO diagnostic data. It can convert this diagnostic data into middleware diagnostic information and transmit it to the middleware component, maintaining independence from the communication protocol.

This extends the functionality of the IO-component to include diagnostic data handling. By converting raw diagnostic data into standardized and/or protocol independent middleware diagnostic information, the IO-component ensures consistent monitoring and analysis of device health and status across different communication protocols. This capability enhances system reliability by providing accurate diagnostics for timely interventions.

In this preferred embodiment, the IO-component is designed and set up to transform e.g. communication link specific diagnosis information, and/or communication protocol specific diagnosis information, to a generic diagnosis representation, named middleware diagnostic information, providing a uniform way to observe e.g. the operational states of the underlying communication link without the need to deep dive into tech specifics. This transformation is also fully configurable and offers a programmable interface.

A possible transformation logic for performing such conversion can e.g. use diagnostic metadata to monitor the operational states of the IO peripherals and handle errors. Such diagnostic transformation engine can e.g. convert protocol-specific diagnostics into a generic and/or communication protocol independent format. An additional possible alarm transformation engine can e.g. transform protocol-specific alarms into communication protocol independent events. This can ensure consistent and standardized monitoring and alarm handling.

Diagnostic and Alarm Transformation Engines can be designed and set up to convert fieldbus-specific diagnostics and alarms into generic representations, facilitating easier monitoring and response. Diagnostic and Alarm Handling can be designed and set up in a way that communication-link- and/or communication-protocol-specific diagnostics and alarms are converted into generic and/or communication protocol independent representations, providing e.g. a uniform way to monitor and respond to operational states and events.

In this preferred embodiment, the IO-component can also be designed to input and output diagnostic data. The IO-component can both receive diagnostic data via the communication link, e.g. from external sources (e.g., sensors, devices) or e.g. a communication link driver and/or communication link protocol stack, and also send diagnostic data via the communication link, e.g. to the devices named above. This bidirectional capability ensures comprehensive monitoring and reporting of system health. The transmission of diagnostic data e.g. occurs via a communication link that utilizes specific communication protocols such as e.g. Ethernet, WLAN, PROFINET, EtherCAT, or Modbus. These protocols facilitate reliable and standardized data exchange between different components.

Upon receiving raw diagnostic data through the communication link, the IO-component converts this data into standardized middleware diagnostic information. This conversion process transformation steps to ensure it is in a format that can be easily interpreted by higher-level applications or control logic. After conversion, the IO-component transmits the standardized middleware diagnostic information to the middleware component of the control device. This ensures that all relevant diagnostic data is accessible for analysis and decision-making. Importantly, the middleware diagnostic information is independent of the underlying communication protocol. This means that regardless of how the raw diagnostic data was transmitted (e.g., via Ethernet, PROFINET, EtherCAT, WLAN), it is converted into a consistent form that can be universally understood by the middleware component.

In summary, this embodiment highlights the IO-component's ability to handle diagnostic data effectively by converting raw data into standardized middleware diagnostic information that is independent of communication protocols. This capability enhances system reliability, facilitates proactive maintenance, and ensures comprehensive monitoring across various applications.

IO diagnostic data refers to information related to the health and status of IO devices and communication links within a control system. This data can include error codes, performance metrics, and operational statuses that help identify issues and ensure optimal functioning. The IO-component converts this diagnostic data into middleware diagnostic information, which is then transmitted to the middleware component e.g. for centralized monitoring and analysis. This conversion ensures that diagnostic information is standardized and protocol independent.

IO diagnostic data can be essential for e.g. maintaining the reliability and performance of industrial automation systems. It can provide insights into potential problems such as device malfunctions, communication failures, or performance degradation, enabling proactive maintenance and timely interventions.

Diagnostic data refers to information that helps monitor the operational status and health e.g. of the control device, various components within a control device or system and/or a controlled device or system. This data is helpful or necessary for identifying potential issues, optimizing maintenance schedules, and ensuring overall system reliability.

In the field of industrial automation "diagnostic data" refers to the information gathered from e.g. control devices, PLCs, fieldbus networks, communication links and connected devices to monitor, analyze, and troubleshoot the health and performance of the automated system. This data is critical for identifying potential issues, optimizing system performance, and ensuring reliable operation.

Examples of the Types of Diagnostic Data:
- Controller Status Codes: Indicators of the controller's operational state, such as running, stopped, or error modes. These codes help in understanding the current state and any issues with the controller.
- Communication Health Indicators: Metrics that assess the quality and reliability of a communication link, including e.g.: Signal quality and strength, Communication error rates (e.g., CRC errors, frame errors) and/or Noise levels on the communication link.
- Error Codes: Specific diagnostic codes that identify faults in the controller, communication network, and/or connected devices. These codes assist in pinpointing and troubleshooting issues quickly.
- I/O Status: Real-time data from input and output modules connected to the PLC, including both digital and analog signals. This data helps in monitoring the state of sensors and actuators.
- Communication Diagnostics: Information related to the performance of a communication network, such as: Packet loss, Transmission delays, Retry counts.
- Cycle Times: Data on the time taken for a controller to complete specific operations, control cycles and/or communication cycles. This information is used to identify performance bottlenecks.
- Device Diagnostics: Status and health information from individual devices connected via a communication link, such as:
- Sensors: operational status, measurement accuracy, calibration data
- Actuators: position, speed, and operational status
- Drives: motor status, torque, speed, and error states
- Temperature and Environmental Data: Readings related to the operating conditions of the controller and/or communication components, ensuring they are within safe operational limits.
- Communication Network Topology Information: Data about the structure and configuration of a communication network, which can help diagnose connectivity issues.

"Diagnostics" in the context of the IO Abstraction layer can refer to the process of identifying, analyzing, and reporting the operational status and potential issues within communication systems. The IO-component can convert e.g. communication-specific IO diagnostic data into a generic format of the middleware diagnostic information, providing a uniform way to monitor the operational states of e.g. various communication technologies. This transformation allows users

to observe and respond to diagnostics without needing in-depth technical knowledge of each specific communication system.

By providing a consistent and configurable diagnostic interface, the IO-component decouples control logic from communication-specific implementations, enabling more flexible and efficient system architectures. This decoupling enhances the reusability of control logic and simplifies the integration of different communication technologies, leading to improved system performance and scalability. The uniform diagnostic representation also facilitates easier monitoring, troubleshooting, and maintenance of PLC systems, ensuring that potential issues are identified and addressed promptly to maintain optimal system performance and reliability.

In a preferred embodiment, the IO-component has access to a communication data storage device or process image storage device of the control device for storing IO data and/or IO diagnostic data received via the communication link and/or for storing IO data and/or IO diagnostic data for transmission via the communication link.

Received IO diagnostic data and/or other IO data can be stored in such a communication data storage device or process image. IO diagnostic data and/or other IO data to be sent via the communication link can also be stored in such a communication data storage device or process image.

Such communication data storage device or process image computer storage can be part of the IO-component, a part of a communication link driver, a part of a protocol stack for the communication protocol, and/or designed and set up as an input/output data buffer and/or a process image for incoming and outgoing data from or to the device or system. Such communication data storage device or process image computer storage can also be part of a connectivity module the IO-component.

Middleware diagnostic information can be designed and set up as standardized diagnostic data that has been converted from raw IO diagnostic data by the IO-component. This information can provide insights into the health and status of various components within the control system. By standardizing diagnostic information into a protocol-independent format, middleware ensures consistent monitoring and analysis across e.g. different devices, software applications and communication protocols.

In a further preferred embodiment, the IO-component can be designed and set up for converting the IO diagnostic data into the middleware diagnostic information in such a way,
- that the middleware diagnostic information is independent of the communication protocol,
- and that, as part of the conversion of the IO diagnostic data into the protocol-independent middleware diagnostic information, a normalization, a standardization, logical structuring and/or a contextualization of the IO diagnostic data takes place.

Normalization can be designed and set up according to the present description, e.g. as described in relation to the conversion of IO control data to middleware variables. It can e.g. be realized as transforming incoming data into a standardized numerical range.

Standardization can be designed and set up according to the present description, e.g. as described in relation to the conversion of IO control data to middleware variables. It can e.g. be realized as transforming into given physical units, as transforming into a percentage of a given parameter, and/or as assigning the IO diagnostic data to given standard diagnostic states (e.g. mapping communication and/or device specific error codes onto a standard diagnosis scheme). Such assigning of standard information, categories and/or classes can e.g. be performed by means of a table, assignment rules, conversions and/or artificial intelligence methods.

Such standard diagnostic states can e.g. be based on a "generic diagnosis representation" providing a uniform way to observe the operational states of the underlying communication link without the need to deep dive into tech specifics. Such generic representations can e.g. comprise the following states:
Operating states: initializing, configuration, operating, and the like - e.g. operating states as defined elsewhere in the present description,
   and/or
health states: green (= everything runs properly), yellow (= there is any warning), grey (= app/service/communication not available), red (= error occurred).

Contextualization can be designed and set up according to the present description, e.g. as described in relation to the conversion of IO control data to middleware variables. It can e.g. be realized as adding metainformation or other additional information or context to data (e.g. device names and types, sensor types, communication parameter names, error code descriptions, a sensor location and other additional information).

Middleware diagnostic information can play a crucial role in enabling centralized monitoring and management of the health and status of a communication connection, a control device and/or connected devices. It can provide a common language for interpreting diagnostic data accurately, facilitating timely interventions and proactive maintenance, thereby improving overall system reliability and performance.

Middleware diagnostic information is independent of the underlying communication protocol used to transmit the raw data via the communication link. This means that regardless of whether the data was transmitted via PROFINET, EtherCAT, Modbus, Ethernet, WLAN or any other communication protocol, it is converted into a standardized format that can be universally understood by the middleware component. This standardization ensures interoperability and seamless integration of diagnostic data from various sources.

Examples of Middleware Diagnostic Information:
- Machine Health Metrics:
   ∘ Temperature: Indicates the operating temperature of a machine component.
   ∘ Vibration Levels: Measures the vibration intensity of rotating machinery.
   ∘ Pressure: Monitors the pressure levels within a hydraulic system.
- Network Diagnostics:
   ∘ Packet Loss: Indicates the percentage of data packets lost during transmission.
   ∘ Latency: Measures the time delay in data transmission across the network.
   ∘ Signal Strength: Monitors the strength of wireless communication signals.

In summary, middleware diagnostic information provides e.g. normalized, standardized, logically structured and/or contextualized insights into system health and operational status, facilitating effective monitoring, fault detection, and predictive maintenance across various applications, independent from the communication link or protocol used.

An IO-component according to the present description can be configurable regarding the conversion of IO diagnostic data into middleware diagnostic information, and the IO-component is furthermore designed and set up in such a way that this configuration can be set up and changed,
in particular in that this configuration can be set up and changed via a configuration manager component of the control device.

This embodiment specifies that the conversion of IO diagnostic data into middleware diagnostic information can be configured and/or changed. Such a configuration and/or change can e.g. be performed via a configuration manager component.

This embodiment introduces a configurability for diagnostic data conversion within the IO-component. By allowing to set configurations and/or configuration changes, e.g. through a configuration manager component, operators can customize and/or parameterize how IO diagnostic data is processed and converted into middleware diagnostic information based on specific requirements or conditions. This flexibility ensures accurate diagnostics and timely interventions.

The parameterization and/or configuration of the IO-component regarding the conversion of IO diagnostic data into middleware diagnostic information can be designed and set up according to the present description - e.g. as described in relation to the configuration and/or parameterization of the conversion of IO control data to middleware variables.

Such parameterization and/or configuration can e.g. be performed by a configuration manager component according to the present description.

An IO-component according to the present description can be designed and set up in a way that the IO component is designed and set up for the input and/or output of IO alarm data to and/or from the control device via the communication link using the communication protocol, and the IO component is designed and set up for the conversion of IO alarm data received via the communication link into middleware event information assigned to the IO alarm data, and subsequently for a transmission of this middleware event information to the middleware, whereas the middleware event information is independent of the communication protocol.

This embodiment describes an additional feature of the IO-component, focusing on its capability to handle IO alarm data. Such alarm data refers to alerts or warnings generated by various components within a control device, communication link and/or device or system, e.g. when specific conditions or thresholds are met. This claim builds upon the foundational capabilities of the IO-component by extending its functionality to include the processing and transmission of alarm data. This capability enhances system reliability, ensures timely responses to critical situations, and facilitates comprehensive monitoring across various applications.

This embodiment specifies that the IO-component is designed for the input of alarm data into the control device via the communication link using the communication protocol. This means that the IO-component can receive alarm data e.g. via the communication link, from a communication link driver, from a protocol stack of the IO-component and/or external sources, such as sensors or devices, via the communication link. This handling of alarm data ensures comprehensive monitoring and timely response to critical situations.

The IO-component can further be designed and set up for output of alarm data from the control device via the communication link using the communication protocol. This means that the IO-component can send alarm data to other components via the communication link. Such bidirectional handling of alarm data ensures comprehensive monitoring and timely response to critical situations.

IO alarm data can be any can be any information and or data e.g. be designed and set up as data or information related to, and/or caused or triggered by:
- a change in a status, operating status, or the like of a device, software, component and/or system
- and/or a system, software, module, device, component reaching a predefined status, operating status, sensor or parameter value, and/or the like.

IO alarm data con also be designed and set up as information about an incidence or occurrence, e.g. a not planned incidence or occurrence, regarding a hardware and/or software (e.g. of an automation system, a control device, a communication link, an IO component or the like), which e.g. needs attendance and or reaction of a human or the system.

Such IO alarm data can be related to the communication link, a communication driver and/or a communication protocol, and be provided to the IO component by the communication link and/or be transmitted by the IO-component via the communication link.

IO alarm data can e.g. be an alarm related to a breakdown or inactivity of the communication link or related to the communication connection reaching a critical error rate or critically low data transmission rate. IO alarm data can be also e.g. any alarms related to a connected device or system reaching a critical state or about informing connected devices about a critical state of the IO-component or the control device or one of its components.

In a preferred embodiment, the IO-component has access to a communication data storage device or process image storage device of the control device for storing IO data and/or IO alarm data received via the communication link and/or for storing IO data and/or IO alarm data for transmission via the communication link.

Received IO alarm data and/or other IO data can be stored in such a communication data storage device or process image. IO alarm data and/or other IO data to be sent via the communication link can also be stored in such a communication data storage device or process image.

Such communication data storage device or process image computer storage can be part of the IO-component, a part of a communication link driver, a part of a protocol stack for the communication protocol, an input/output data buffer and/or a process image for incoming and outgoing data from or to the device or system. Such communication data storage device or process image computer storage can also be part of a connectivity module the IO-component.

Event information can e.g. be designed and set up as and/or caused or triggered by:
- data or information related to a change in a status, operating status, or the like of a device, software, component or system
- and/or data or information related to a system, software, module, device, component reaching a predefined status, operating status, sensor or parameter value, or the like.

Upon receiving raw alarm data through the communication link, the IO-component converts this data into standardized middleware event information. The communication protocol independent middleware event information is then transmitted to the middleware component, ensuring that all relevant alarm data is accessible for analysis and decision-making.

This conversion or transformation enable that alarms are represented in a uniform way, allowing e.g. middleware clients to register to these events and act accordingly, regardless of the specific communication technology being used. By providing such a generic representation of alarms, the control logic is decoupled from communication-specific implementations, allowing the control logic to remain unchanged when different communication technologies are utilized or when the configuration of the same communication link or protocol is altered. This decoupling enhances the flexibility, reusability, and efficiency of control systems, enabling more scalable and adaptable control architectures.

This conversion process can involve normalizing, standardization, logical structuring and/or contextualizing the raw IO alarm data to ensure it is in a format that can be easily interpreted by higher-level applications or control logic.

In a further preferred embodiment, the IO-component can be designed and set up for converting the IO alarm data into the middleware event information in such a way,
- that the middleware event information is independent of the communication protocol,
- and that, as part of the conversion of the IO alarm data into the protocol-independent middleware event information, a normalization, a standardization, logical structuring and/or a contextualization of the IO diagnostic data takes place.

Normalization can be designed and set up according to the present description, e.g. as described in relation to the conversion of IO control data to middleware variables. It can e.g. be realized as transforming incoming data into a standardized numerical range.

Standardization can in general be designed and set up according to the present description, e.g. as described in relation to the conversion of IO control data to middleware variables. It can e.g. be realized as transforming into given physical units, as transforming into a percentage of a given parameter, and/or as assigning the IO alarm data to given standard event states (e.g. mapping communication and/or device specific alarms onto a standard event scheme). Such assigning of standard information, categories and/or classes can e.g. be performed by means of a table, assignment rules, conversions and/or artificial intelligence methods. Such standard event states are examples for middleware event information.

Such standard event states can e.g. be based on a "generic event representation" providing a uniform way to observe an alarm, event and/or error of the underlying communication link without the need to deep dive into tech specifics. Such standard event states can e.g. be a standard setting for a control device or specifically defined for a special control device. Such standard event states can be set, defined and/or changed e.g. during set up and/or parametrization of the control device or any module of the control device, e.g. an IO component or a central control module according to the present description.

In a further embodiment, standard middleware events can be created and/or amended by a user during engineering the control device and/or modules of the control device using an automation engineering system or by parameterization or configuration of the control device and/or modules of the control device by a configuration manager component according to the present description and/or a corresponding automation engineering system.

In a further embodiment, standard middleware events or event states can be set up and/or configured by creating an IO component using a software development kit according to the present description.

Such standard event states and/or standard middleware events can be e.g. stored in one or more alarm configuration files and/or alarm library files, e.g. in the IO component, the middleware component and/or the control device.

In a preferred embodiment, the IO-component is designed and set up, among others, for converting IO data into middleware information or middleware data in such a way, that IO data is mapped onto standard event states and/or standard middleware events according to the present description.

Contextualization can be designed and set up according to the present description, e.g. as described in relation to the conversion of IO control data to middleware variables. It can e.g. be realized as adding metainformation, alarm metadata or other additional information or context to data (e.g. alarm information, time stamps, critically information, priority information, device names and types, sensor types, communication parameter names, error code information and descriptions, sensor or device locations and other additional information).

A crucial aspect of this claim is that the format of the middleware event information is independent of the underlying communication protocol. This means that regardless of how the raw alarm data was transmitted - whether via Ethernet, WLAN, PROFINET, EtherCAT, Modbus, or another protocol - it is converted into a consistent format that can be universally understood by the middleware component. This protocol independence ensures interoperability and seamless integration of alarm data from various sources.

For example, in an industrial safety system, the IO-component might receive raw alarm data from safety sensors monitoring parameters like gas leaks, high temperatures, or pressure anomalies. The IO-component converts this raw data into standardized middleware event information, which is then transmitted to the middleware component. This allows higher-level safety applications to analyze the alarm data and trigger appropriate responses, such as shutting down machinery or alerting personnel.

The transformation logic uses diagnostic and alarm metadata to monitor the operational states of the IO peripherals and handle errors. The Diagnostic Transformation Engine converts protocol-specific diagnostics into a generic format, while the Alarm Transformation Engine transforms protocol-specific alarms into protocol-independent events. This ensures consistent and standardized monitoring and alarm handling.

In a preferred embodiment, the IO-component and/or control device can be designed and set up for transmission of middleware event information to one or more other components of the control device via the middleware component (e.g. an alarm application, a web server, a web user-interface, a control device management application, an OPC-UA-communication-application, a HMI-application). The IO-component and/or control device can further be designed and set up for outputting such middleware event information, e.g. to an HMI, computer or user.

An IO-component according to the present description can be configurable with regard to the conversion of the IO alarm data into middleware event information, and the IO-component can furthermore be designed and set up in such a way that this configuration can be set up and changed, in particular in that this configuration can be set up and changed via a configuration manager component of the control device.

This embodiment specifies that the conversion of IO alarm data into middleware event information can be configured and/or changed. Such a configuration and/or change can e.g. be performed via a configuration manager component.

This embodiment introduces a configurability for alarm data conversion within the IO-component. By allowing to set configurations and/or configuration changes, e.g. through a configuration manager component, operators can customize and/or parameterize how IO alarm data is processed and converted into middleware event information based on specific requirements or conditions. This flexibility ensures accurate alarms and timely interventions.

The parameterization and/or configuration of the IO-component regarding the conversion of IO alarm data into middleware event information can be designed and set up according to the present description - e.g. as described in relation to the configuration and/or parameterization of the conversion of IO control data to middleware variables.

Such parameterization and/or configuration can e.g. be performed by a configuration manager component according to the present description.

In the following a few examples for files, or part of files, which can be used for configuring an IO-component according to the present description, for example by a configuration manager component according to the present description, are described:
- A file (e.g. XML- or YML-file) or executable code containing configuration information for the IO-component and/or information regarding additional files for setting up, configuring and/or running an IO-component according to the present description.
- A file (e.g. XML- or YML-file) or executable code containing definitions, metainformation and/or further information regarding all kinds of middleware variables according to the present description, middleware diagnostic information according to the present description, and/or middleware event information according to the present description.
- A file (e.g. XML- or YML-file) or executable code containing configuration parameters, settings, definitions and/or further information regarding a communication link, a communication driver and/or a protocol stack according to the present description.
- A file (e.g. XML- or YML-file) or executable code containing information and/or metadata regarding configured data to be communicated or communicated via the communication-link according to the present description. This can e.g. be such data, IO data, IO diagnostic data and/or IO alarm data, that can be mapped to middleware variables according to the present description, middleware diagnostic information according to the present description, and/or middleware event information according to the present description.
- A file (e.g. XML- or YML-file) or executable code containing a mapping of data to be communicated or communicated via the communication-link according to the present description, to variables, tags, diagnostic information and/or event information or the like to be communicated or communicated via a middleware component according to the present description. Such mapping can e.g. be a mapping of e.g. IO data, IO diagnostic data and/or IO alarm data to middleware variables according to the present description, middleware diagnostic information according to the present description, and/or middleware event information according to the present description.

One or more of such files can e.g. contain one or more of the files named above or parts of such files.

The aforementioned task is also solved by a control device for controlling a machine or system, comprising an IO-component according to the present description and a middleware component according to the present description, wherein the IO-component is designed and set up for communication with the middleware component.

Such a control device, which incorporates an IO-component according to the present description and a middleware component according to the present description, is designed and set up for controlling a machine or system. This leads to a control device enabling a cohesive and efficient control system capable of handling various data inputs and outputs, converting them into standardized formats, and facilitating seamless communication between different parts of the system.

The control device is equipped with an IO-component that interfaces with external sensors and devices via a communication link using a communication protocol. At least one of the IO-component's roles is to receive raw data from these external sources, convert it into standardized middleware variables, diagnostic information, and/or event information, and transmit this processed data to the middleware component. This conversion ensures that the data is in a consistent format, independent of the underlying communication protocol, making it easier to integrate and process within the control system.

The middleware component acts as a communication layer between the IO-component and further applications or control logic within the control device. It facilitates seamless communication by ensuring that all data received from the IO-component is independent from the communication protocol, e.g. by normalization, standardization, logical structuring and/or contextualization, and ready for further processing by the control logic or other applications. This protocol-independence simplifies data handling, improves system performance, and enhances interoperability between different devices and systems.

Such a control device can further be designed and set up, that the control device further comprises

a configuration manager component which is designed and set up for receiving configuration data, for coupling to the middleware component and for configuring further software applications and/or hardware modules coupled to the middleware component on the basis of the received configuration data,
wherein furthermore the configuration manager component is designed and set up in particular
- for configuring the IO-component with regard to the conversion of the IO control data into middleware variables, in particular regarding the normalization, standardization, logical structuring and/or contextualization of the IO control data,
- and/or for configuring the IO-component with regard to the conversion of the IO diagnostic data into middleware diagnostic information,
- and/or for configuring the IO-component with regard to the conversion of the IO alarm data into middleware event information.

This embodiment describes a system for operating a control device that incorporates an IO-component according to the present description, a middleware component according to the present description and a configuration manager component according to the present description.

The aforementioned task is also solved by a configuration manager component according to the present description for a control device according to the present description,
whereas the control device comprises a middleware component according to the present description, and whereas the configuration manager component is designed and setup for receiving configuration data according to the present description, for coupling to the middleware component, and for configuring at least one further software application and/or hardware component coupled to the middleware on the basis of the received configuration data,
wherein furthermore the configuration manager component is designed and set up in particular
   - for configuring the IO-component with regard to the conversion of the IO control data into middleware variables, in particular regarding the normalization, standardization, logical structuring and/or contextualization of the IO control data,
   - and/or for configuring the IO-component with regard to the conversion of the IO diagnostic data into middleware diagnostic information,
   - and/or for configuring the IO-component with regard to the conversion of the IO alarm data into middleware event information.

Such configuration manager component solves the task mentioned above because it enables an easier integration and/or connection of other software applications and/or other modules with the controller. This is due to the fact that such configuration manager component enables a relatively comfortable and/or easy configuration and/or parameterization of such other software applications and/or modules, which eases their integration with and adaption to the control device.

Such configuration manager component can e.g. be designed and set up as a software component according to the present description. Such software component can be e.g. designed and set up as a software module for a control device, e.g. a virtual PLC, a software PLC or a hardware controller (e.g. a hardware PLC). Such software can be also integrated in a hardware controller and/or hardware PLC being designed and set up communicating e.g. with a backplane bus of such a controller, e.g acting as a middleware component in such device. Such configuration manager component can e.g. also be integrated into a firmware of such hardware controller or be a software module for such firmware.

A configuration manager component can also be designed and set up as a hardware component according to the present description. The configuration manager component can e.g. be integrated in a separate hardware module for a hardware-controller, e.g. a modular PLC, and/or designed and set up as a separate hardware module for a hardware controller, e.g. a modular PLC.

The hardware controller, hardware component and/or hardware module can e.g. be designed and set up according to the present description.

The configuration manager component can e.g. be designed and set up for managing the settings and parameters that govern how the IO-component handles data e.g. to be transferred to the middleware component. The configuration manager allows users to e.g. set and/or adjust these settings based on changing conditions or operational requirements, ensuring that the control device remains flexible and adaptable.

In summary the configuration manager component can e.g. ensure that settings can be set and/or adjusted to maintain flexibility and adaptability in various operational scenarios. This method enhances system performance, improves interoperability between different devices, and ensures effective control of machines or systems across diverse applications.

The configuration of the IO-component by the configuration manager component regarding the conversion of the IO control data into middleware variables, in particular regarding the normalization, standardization, logical structuring and/or contextualization of the IO control data, can be designed and set up according to the present description.

The configuration of the IO-component by the configuration manager component regarding the conversion of the IO diagnostic data into middleware diagnostic information can also be designed and set up according to the present description.

The configuration of the IO-component by the configuration manager component regarding the conversion of the IO alarm data into middleware event information can also be designed and set up according to the present description.

The reception of configuration data by the configuration manager component can be designed and set up according to the present description. It can e.g. take place directly from an external device or application, e.g. an automation engineering system, or via the middleware from e.g. such external devices or applications (e.g. an automation engineering system).

Configuration data received by the configuration manager component can e.g. be corresponding parameter files, assignment lists, diagnostic information schemes, diagnostic information schemes, event schemes, assignment rules, or the like. Such configuration data can e.g. also comprise or consist of program code for performing a conversion of IO data according to the present description into protocol independent middleware variables and/or information according to the present description.

Such configuration files, parameter files, lists, software or the like can e.g. be transferred, or be transferable, from an automation engineering system (which generates one or more parameter files, for example) or external computing device to the configuration manager component.

The configuration manager component is designed and set up to e.g. set up and/or change the respective conversion configuration of the IO component.

In a preferred embodiment the configuration manager component can be designed and set up for communication with the middleware component, for communication with the IO-component, and/or for communication with the IO-component via the middleware component.

This embodiment describes a control device that includes a configuration manager component, which is specifically designed and set up to facilitate communication within the control device. This configuration manager component can play a crucial role in managing the setup, parameterization and/or configuration of e.g. various elements of the control device, e.g. the IO-component. It is capable of e.g. communicating directly with the middleware component, which acts as an communication layer between the IO-component and other modules or software applications of the control device. Additionally, the configuration manager can be also designed and set up to communicate directly with the IO-component.

The configuration manager component's ability to communicate with both the middleware and the IO-component, either directly or via the middleware, provides a flexible and robust framework for managing the control device's operations. This setup allows for adjustments and updates to be made to the system's configurations, ensuring that the control device can adapt to changing conditions or new operational requirements. By centralizing the management of configuration data, the configuration manager component ensures consistency and reliability across the entire control system.

The aforementioned task is also solved by a Software development kit (SDK) comprising software elements for creating an IO-component according to the present description in the form of a computer program product, the software elements comprising software modules and/or data relating to
- name and/or version of the IO-component,
- general mechanisms for integrating the IO-component into the control device and connecting the IO-component to the middleware,
- a coupling to the communication link and a corresponding communication protocol,
- a creation of middleware variables, middleware event information and/or middleware diagnostic information, and/or
- relations regarding data transmitted and/or to be transmitted via the communication link and corresponding middleware variables, middleware event information and/or middleware diagnostic information communicated or to be communicated to or by the middleware.

The software development kit (SDK) described here includes software elements for creating an IO-component according to the present description. This SDK comprises one or more computer program products, comprising one or more software modules, data and/or configuration files necessary for the creation of the IO component according to the present description and the integration of this IO-component into a control device. The SDK provides developers with the tools and resources needed to create an IO-component that can effectively interface with the control device and its middleware as well as with the communication link using the communication protocol.

The software elements included in the SDK can cover several relevant aspects. Firstly, they can provide information about the name and version of the IO-component. Secondly, the SDK can include general mechanisms and/or software for integrating the IO-component into the control device. These mechanisms can outline procedures for connecting the IO-component to the middleware, ensuring seamless communication and interoperability between different system components. Thirdly, the SDK can provide details and/or mechanisms on coupling the IO-component to the communication link and implement corresponding communication protocols.

Additionally, the SDK can include mechanisms for creating middleware variables, middleware event information, and middleware diagnostic information. These mechanisms can be designed and set up, among others, to convert raw data from external sources according to the present description into standardized formats according to the present description that can be understood, communicated and/or processed by the middleware. This conversion can e.g. include a normalization, standardization, logical structuring and/or contextualization, e.g. ensuring that data can more easily provided to other applications, modules or control logic of the control device.

In a preferred embodiment, the SDK for creating an IO-component according to the present description can be designed and set up to implement a state machine according to the present description in the IO-component created.

Finally, the SDK can provide information on the relationships between data transmitted via the communication link and corresponding variables, event information, and diagnostic information communicated to or by the middleware. This can ensure that all data interactions are accurately mapped and managed, facilitating efficient data processing and utilization within the control system.

In summary, a SDK according to the present description for creating an IO component according to the present description is designed and set up as a kit of software elements according to the present description designed to enable developers to create an IO-component according to the present description that integrates into a control device. The SDK includes software elements covering identification, integration mechanisms, communication protocols, data conversion processes, and/or data relationship management. This ensures that the IO-component can function effectively within the control system, to connect the communication link to the control device.

The aforementioned task is also solved by a method for creating an IO-component according to the present description by using a software development kit (SDK) according to the present description comprising software elements according to the present description for creating the IO-component in the form of a computer program product, the software elements comprising software modules and/or data relating to
- name and/or version of the IO-component,
- general mechanisms for integrating the IO-component into the control device and connecting the IO-component to the middleware,
- a coupling to the communication link and a corresponding communication protocol,
- a creation of middleware variables, middleware event information and/or middleware diagnostic information, and/or
- relations regarding data transmitted and/or to be transmitted via the communication link and corresponding middleware variables, middleware event information and/or middleware diagnostic information communicated or to be communicated to or by the middleware.

A "Software Development Kit (SDK)" in general is a collection of software tools, libraries, documentation, and sample code that developers use to create a specific software application, e.g. for a special platform or system.

In the context of the present description, a SDK for creating an IO component according to the present description allows software developers to create IO-components according to the present description suitable for specific communication links, communication protocols and/or control devices. The SDK provides the necessary tools and interfaces to configure the IO-component, implement a transformation logic in it, and/or integrate an IO abstraction with a specific communication technology and/or application.

A Software Development Kit (SDK) according to the present description can be designed and set up as a toolkit designed to assist developers in creating an IO-component according to the present description that integrates seamlessly into a control device and allows its connection to the communication link specified by the respective SKD components. This SDK is presented as one or more computer program products and includes various software elements, modules, and data necessary for the creation, configuration, and/or integration of the IO-component. The SDK ensures that the IO-component can effectively interface with the control device and its middleware, facilitating efficient data exchange and processing via the communication link.

A software development kit according to the present description can e.g. comprise and/or create at least one or more of the following components:
- APIs: one or more Application Programming Interfaces or Application Interfaces (e.g. to connect to the communication link),
- Code samples,
- Code libraries,
- Documentation,
- Tools (Debugger...).

The use of the SDK can work e.g. in a way, that corresponding software-elements of the SDK according to the present description are executed on a computer. By executing this code, an IO-component according to the present description, or one or more parts or components of such IO-component, is created e.g. using the information taken from the respective configuration files. By execution of the SDK-code, the IO-component can also be already installed with the control component and connected to its middleware component according to the present description. The IO-component created by execution of the SDK code on a computer can also be already connected to the communication link.

In another embodiment, components of the SDK are used by a software developer to put together an IO-component according to the present description.

The creation of an IO-component according to the present description by using an SDK according to the present description can also be performed by a combination of the methods previously described.

Such SDK enables the creation of an IO-component according to the present description being e.g. adapted to a specific communication link needed. If an IO-component is needed to connect a control device according to the present description to a specific communication link using a specific communication protocol, the SDK has to be put together with the proper configuration files, software elements and the like specific for this communication link and communication protocol. After executing such SDK code on a computer, the according IO-component is creation according to the present description.

This enables a very flexible way to create an IO-component and/or a corresponding control device with such an IO-component adapted to any communication connection needed.

The SDK can comprise several relevant components. Firstly, it can include software modules, which are reusable code snippets or libraries that encapsulate specific functionalities required for the IO-component. These modules provide predefined functions and procedures that developers can use to implement various features of the IO-component, such as data conversion, communication protocol handling, and middleware interaction.

Additionally, the SDK can contain data relating to the name and version of the IO-component. This component includes metadata about the IO-component, such as its name and version, which is crucial for version control, ensuring compatibility, and managing updates or modifications to the IO-component.

The SDK also can provide general mechanisms for integrating the IO-component into the control device. These mechanisms outline standardized procedures and protocols for connecting the IO-component to the control device and its middleware, providing guidelines on how to establish seamless communication and interoperability between different system components.

Furthermore, the SDK can include details on coupling the IO-component to the communication link and corresponding communication protocols. This can ensure that data transmission and reception occur accurately and reliably by providing information on how to connect the IO-component e.g. to various external sensors and devices using specific communication protocols like Ethernet, WLAN, PROFINET, EtherCAT, or Modbus.

Another relevant component of the SDK can be one or more components for creating middleware variables, middleware event information, and/or middleware diagnostic information. Such modules can guide developers in converting raw data from external sources into standardized formats that can be processed by the middleware. This involves normalization (adjusting values to a common scale), standardization, logical structuring and/or contextualization (adding meaningful context to raw data).

The SDK can also provide information on relations regarding data transmitted and/or to be transmitted via communication connections. This component ensures accurate data mapping and efficient data processing within the control system by providing information on how to map and manage data interactions between the communication connections and corresponding middleware variables, event information, and diagnostic information.

The functionality and setup of the SDK is designed to streamline the development process of an IO-component by providing all necessary tools, resources, and guidelines in a single package. Developers can e.g. begin by installing the SDK on their development environment using an installer or setup script that configures the development environment with all necessary dependencies and tools. Once installed, developers then can e.g. configure the SDK by specifying project settings such as the name and version of the IO-component, target communication protocols, and integration mechanisms. This configuration ensures that all components of the SDK are tailored to the specific requirements of the project.

During development, developers can use the provided software modules to implement various features of the IO-component. For example, they can use predefined functions for data conversion, communication handling, and/or middleware interaction. The SDK's libraries can simplify complex tasks by providing ready-to-use code snippets. The SDK also can guide developers in mapping raw data from external sensors/devices to standardized middleware variables. This involves defining how raw data should be normalized, standardized, logically structured and/or contextualized before being transmitted to the middleware.

The SDK can also include tools for testing the IO-component's functionality. Developers can simulate data transmission and reception, validate data conversions, and ensure that all interactions with the middleware are functioning correctly. Once development and testing are complete, developers can deploy the IO-component into the control device using deployment scripts provided by the SDK. These scripts automate the deployment process, ensuring that all configurations are correctly applied.

Finally, the SDK can provide tools for maintaining and updating the IO-component. Developers can use version control features to manage updates, track changes, and ensure compatibility with other system components. By providing a comprehensive set of resources, the SDK ensures that developers can create robust, efficient, and interoperable IO-components that enhance overall system performance and adaptability.

A software development kit according to the present description can also comprise software elements for creating a configuration manager component in the form of a computer program product according to the present description, the software elements comprising software elements relating to:
- a creation of a software application for receiving configuration data, for coupling to the middleware component and for configuring an IO-component according to the present description, being coupled to the middleware component, and eventually for configuration of further software applications coupled to the middleware component based on the received configuration data.

In this embodiment of the present invention, a software development kit (SDK) that includes software elements for creating a configuration manager component according to the present description is described. This SDK is presented as a computer program product and comprises various software elements necessary for the development, configuration, and integration of a configuration manager component according to the present description into a control device. The SDK according to this embodiment ensures that developers have the tools and resources needed to create a configuration manager component according to the present invention that can effectively configure and/or parameterize the various elements within the control system.

Such a SDK for creating a configuration manager component according to the present invention includes software elements that facilitate the creation of a software application capable of receiving configuration data. Such an application created is also designed and set up to configure an IO-component according to the present description. Such configuration manager component created by the SDK can also be designed and set up to configure other software application of the control device. Such a configuration manager component can e.g. also be designed to couple with the middleware and configure other software applications that are also coupled to the middleware based on the received configuration data. The SDK provides guidelines and modules that help developers to create and/or implement this functionality, ensuring that the configuration manager component can dynamically adjust settings and parameters across the entire control system.

One of the key functionalities enabled by this SDK is the ability to configure the parameterization of the IO-component, e.g. regarding the normalization, standardization, logical structuring and/or contextualization of IO control data. This means that developers can set up and modify how raw data from external sensors and devices is processed and converted into middleware variables according to the present description - and vice versa. The SDK provides tools to define these configurations, ensuring that the IO-component operates under various conditions.

Additionally, such a SDK for creation a configuration manager component according to the present description can support configuring the IO-component with regard to converting IO diagnostic data into middleware diagnostic information, and vice versa. This e.g. involves setting up how diagnostic data, such as error codes or performance metrics, is normalized, standardized, logically structured and/or contextualized before being transmitted to the middleware. The SDK can include modules that guide developers in implementing these configurations, ensuring accurate and reliable diagnostic information is available for monitoring and troubleshooting purposes.

Such SDK can also facilitate configuring the IO-component concerning converting IO alarm data into middleware event information, and vice versa. This can involve defining how alarm signals or warning notifications are processed and converted into middleware event information according to the present description that can be transmitted to the middleware. The SDK can provide resources to set up these configurations, enabling e.g. timely and accurate alarm information being available.

Furthermore, the SDK can include elements for establishing communication between the configuration manager component and other components within the control system. This can e.g. include direct communication with the middleware component, direct communication with the IO-component, and communication with the IO-component via the middleware. Such communication capabilities can e.g. enable that the configuration manager component can effectively manage and coordinate elements within the control system.

The following paragraphs contain descriptions of examples of embodiments and/or applications of an IO-component, control device and/or software development kit (SDK) according to the present description. These examples relate to realizing a decoupling of fieldbus specific services and contextualization of fieldbus raw data using IO-abstraction. In these examples, the fieldbus mentioned is an example for a communication link using a communication protocol according to the present description. The Programmable Logic Controller (PLC) mentioned in those examples is an example for a control device according to the present description.

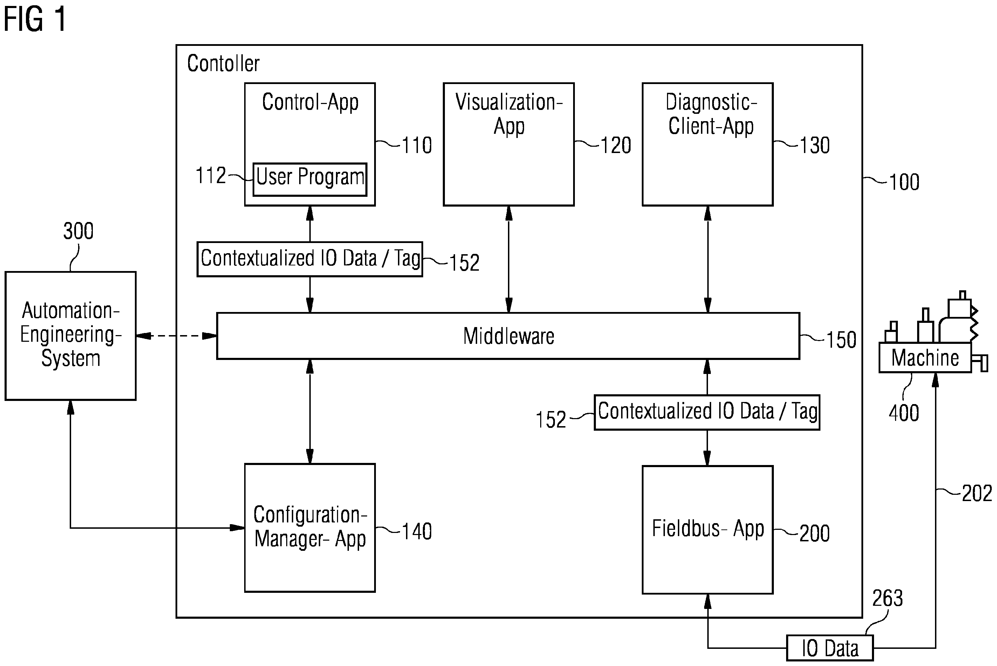

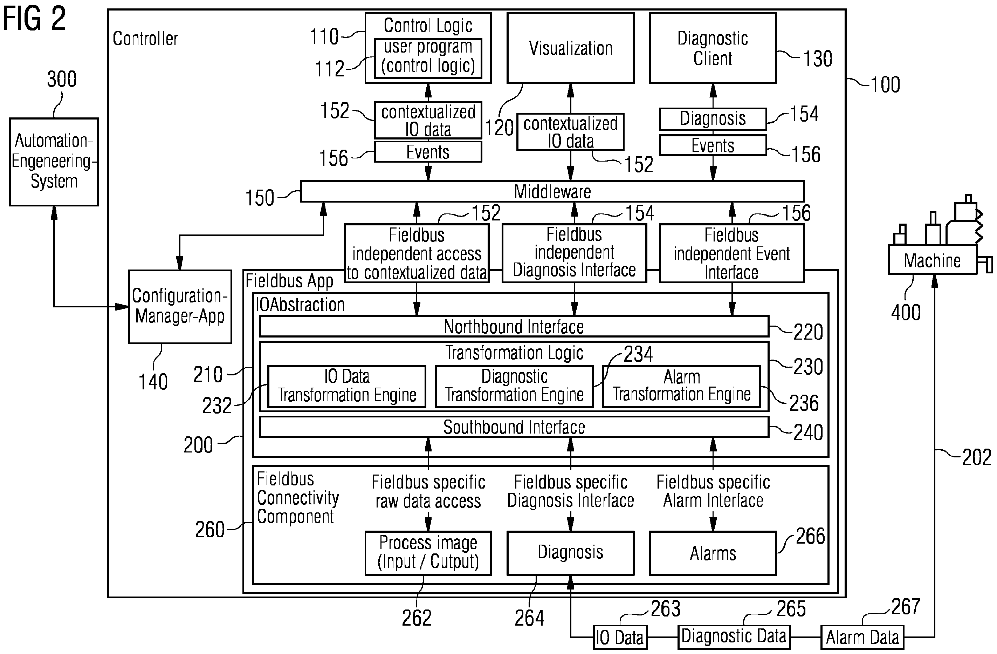

The example described here is partly also explained in more detail in the in the description of the figures 1 and 2 enclosed.

In the architecture of today's Programmable Logic Controllers (PLC) from various vendors the control logic is tightly coupled to a fieldbus connectivity component and operates on raw fieldbus data. This leads to that in case a different fieldbus technology shall be used, or in case the layout /configuration of the same fieldbus is changed, the control logic must be adapted accordingly. Furthermore, in today's PLCs, fieldbus data is consumed as raw data by the control logic and the control logic needs to convert and set the raw data in context. The major drawback of this concept is that, if other applications (e.g., visualization, data storage) need to access raw fieldbus data, they have to convert and set the data in context by themselves.

Today, due to the tight coupling of components, utilizing a specific fieldbus technology leads to a conditional compilation of the whole software stack. If the underlying fieldbus technology changes, then the whole software stack needs to be adapted and recompiled.

Utilizing a different fieldbus technology also incorporates adapting of data access mechanisms/conversions which are handled by the control logic within the user program. As a result of changing the fieldbus technology the control logic also needs to be adapted to fit the data access requirements defined by the fieldbus technology. Other applications who need access to raw fieldbus data must handle the data conversion and adaptation of data access mechanisms by themselves.

The limitation of handling raw fieldbus data and contextualization in each application leads to system processing overhead and therefore system performance drawbacks.

These problems and/or drawbacks are solved by the following concept of IO abstraction leading to the described example embodiments for an IO-component, control device and/or software development kit (SDK) according to the present description.

The concept of IO abstraction decouples fieldbus specific raw data access, diagnosis and alarm interface and offers a generic fieldbus independent access to contextualized data, diagnosis, and alarms.

The main purpose of IO Abstraction is the decoupling of fieldbus specific implementations e.g. from internal operations of the control device. Nevertheless, it also describes a unified approach to contextualize raw data and make it available to various target platforms. Whereas the source of the raw data does not need to be a fieldbus component it could also be any kind of data provider.

The IO Abstraction incorporates an IO component comprising a transformation logic and a generic configurable north- and southbound interface. North- and southbound interfaces are fully configurable depending on the underlying fieldbus or respectively the northbound application or middleware interface.

Whereas the northbound interface handles the communication of the IO-component to the middleware component of the control device, the southbound interface handles the communication between a transformation logic or abstraction module according to the present description and the communication link specific components (e.g. fieldbus specific components) of the IO-component and/or the control device. Such communication link specific components can e.g. be a corresponding protocol stack, a communication driver and/or a connectivity module according to the present description.

The transformation logic is also fully configurable. In more complex data transformation scenarios transformation logic can be injected in a programmatic way.

IO-Abstraction can be realized and/or implemented in an IO-component e.g. as an abstraction layer between the control logic of a control device and a fieldbus connectivity component (e.g. PROFINET, EtherCAT, Modbus, ...) or a connectivity module according to the present description.

The IO abstraction can be realized as SDK which allows fieldbus integrators to utilize it to create a fieldbus software application suitable for various target computer and/or controller platforms.

To further decouple fieldbus connectivity from the behavior of a northbound application or a communication of an IO data transformation engine of a corresponding IO component, the IO data transformation engine can incorporate a generic state machine acting as a mediator between fieldbus connectivity of an IO-component according to the present description and the northbound application or communication interface of an IO-component according to the present description.

Further description of a northbound interface of an IO-component for connecting the IO-component to a middleware of a control device according to the present description:
Data provisioning using a northbound interface can be defined by logical entities. Single logical entities can be compound to a more complex logical entity which itself defines the interface to an underlying physical machine instance. Such logical entities of such a northbound interface can e.g. be related to a middleware-variable interface, a diagnostic interface and/or an event interface between the IO-component and the middleware component.

The data provisioning cycle and behavior quality information of such logical entities can be configured by the user and can be completely independent from a fieldbus or communication link connectivity component of an IO-component according to the present description. In general, such logical entities can define a data contract between the IO Abstraction and other applications (e.g. a control logic of a control device) to access data.

Logical entities provide besides data also status information reflecting state of the underlying fieldbus or communication link as well as a generic state machine which can be part of the IO Abstraction.
- Northbound Interface:
   The configurable northbound interface connects the transformation logic with a generic data access interface and relates to a target controller platform where the IO-component shall be integrated.
- Transformation Logic:
   In the following, an example for a transformation logic of an example of an IO-component according to the present description is described in more detail:
   Such Transformation Logic of an IO-component can incorporate transformation engines for IO Data (being an example for IO control data according to the present description), Diagnostics (being an example for IO diagnostic data according to the present description) and Alarms (being an example for IO alarm data according to the present description).
- IO Data Transformation Engine:
   An IO data transformation engine can transform fieldbus specific raw data to fieldbus independent contextualized data. It provides a configuration interface allowing the user to configure the mapping between raw data and logical entities, in particular between IO control data and middleware variables according to the present description. The configuration (e.g. using a XML, YAML or YML format) furthermore describes how raw data buffers are split up into several logical entities or how logical entities are combined to a raw data buffer.

Besides the mapping the structuring of logical entities, the data transformation engine handles the decoupling of data provisioning cycle of logical entities and a fieldbus communication cycle or communication link cycle. Such data provisioning cycle of logical entities can be configurable via the configuration interface. As a result, the data provisioning cycle of logical entities is completely independent from the fieldbus communication or communication link cycle.

Another aspect of the IO Data Transformation Engine is the transformation of raw data to contextualized data. The transformation of raw data can imply norming and scaling as well as the conversion into different target data types before it is provided as logical entity e.g. to the northbound interface. These actions are also fully configurable, e.g. via a configuration interface of the Data Transformation Engine.
- Diagnostic Transformation Engine:
   A diagnostic transformation engine can transform fieldbus specific or communication link specific diagnosis information (e.g. IO diagnostic data) to a generic diagnosis representation (e.g. middleware diagnostic information) providing a uniform way to e.g. observe the operational states of the underlying fieldbus or communication link without the need to deep dive into tech specifics. The Diagnostic Transformation Engine is also fully configurable and offers a programmable interface.
- Alarm Transformation Engine:
   An alarm transformation engine can transform fieldbus specific or communication link specific alarms (e.g. IO alarm data) to fieldbus independent and/or communication link independent events on the middleware (e.g. middleware event information). Middleware clients can register to these events and act accordingly. The transformation of fieldbus specific or communication link specific alarms to middleware events can be fully configurable and offers e.g. also a programmable interface.
- Southbound Interface:
   A generic southbound interface can be designed and set up as an adaption layer to an underlying fieldbus or communication link connectivity component (e.g. comprising a protocol stack, a corresponding driver, a process image storage and/or a connectivity module according to the present description). It can be configured in a way that it handles various fieldbus connectivity components or communication link connectivity components (e.g., PROFINET, EtherCAT, Modbus, Ethernet, OPC-UA, ...). It can provide e.g. a transformation logic with a generic data access interface. A Southbound Interface can e.g. handle data as raw data buffers without context.

Such implementations and/or examples for embodiments of an IO-component according to the present description can have the following advantages:
- Decoupling of a fieldbus connectivity component or communication link connectivity component and control logic enables the realization of distributed control architectures2, in which fieldbus component and/or communication link component, control logic and/or any other application can reside on any computing node.
- Such control logic can be used more efficiently and can be easily reused due lack of dependency to the underlying fieldbus or communication link used HW components.
- Transformation of raw data is limited to the IO abstraction as described in the present description. Therefore, other applications do not have to take care of transforming data which leads to performance improvements.
- The utilization of contextualized, standardized and/or logical structured data instead of raw data makes the handling of data more efficient and reusable.
- Such an implementation provides e.g. a uniform way to observe the operational states of the underlying fieldbus or communication link without the need to deep dive into tech specifics.

Further advantageous embodiments can be found in the dependent claims.

In the following, the invention is explained in more detail by way of example with reference to the attached drawings.
Figure 1 shows an example system for an IO component as described above.
Figure 2 shows a more detailed embodiment of the example system shown in Figure 1.

Figure 1 shows a controller 100 for controlling a machine 400. The controller 100 is an example for a control device according to the present description. The machine 400 is an example for a device or system according to the present description.

Figure 1 shows a simplified example of the example embodiment shown in Figure 1 and 2 for explaining the basic functionality of this example embodiment. A more detailed explanation of this example embodiment is provided regarding Figure 2.

As shown in figure 1, the controller 100, which can be designed and set up as an industrial PC (IPC) with the software modules or Apps shown in figure 1, comprises a control app 110 comprising a user program 112. The control app 110 is designed and set up to execute the user program 112 and thereby and therewith controlling the machine 400.

The control app 110 is connected to a middleware 150, which is an example for a middleware component according to the present description. During the execution of the user program 112 by the control app 110 for example so-called tags 152 are created for transfer to the machine 400 for controlling it. Such tags 152 are contextualized IO data 152 in the example system shown in figures 1 and 2, and examples for middleware variables according to the present description. Such tags 152 have a standardized middleware data format and are fieldbus-independent according to the present description. Such standardized middleware data format can e.g. be defined for each tag-type separately. Alternatively, or in addition, standardized tag-types can be defined and used by the software applications 110, 120, 130, 140, 200 and middleware 150 of the control device 100.

Additional comment: the abbreviation "IO" or "I/O", used in the present description as an abbreviation for "input-output", can be spelled as IO or I/O. Both spellings are used synonymously within the present description.

Such transfer of the tags 152 from the control app 110 to the machine 400 can be designed and set up in a way, that tags 152, created by execution of the user program 112, for controlling the machine 400 are transferred from the control app 110 to the middleware 150 and from the middleware 150 to a fieldbus app 200. In the following, this information can be transferred via this fieldbus app 200 of the controller 100 in the form or IO data 263 to the machine 400 via a fieldbus connection 202 or fieldbus 202. Such fieldbus connection 202 can be designed and set up e.g. as one of the common automation fieldbuses, like ProfiNet, EtherCAT, Modbus, or the like.

The fieldbus app 200 is an example for an IO-component according to the present description. The fieldbus connection 202 and/or fieldbus 202 are examples for a communication link according to the present description.

For transfer of the tags 152, transferred from the middleware 150 to the fieldbus app 200, and forwarding the information contained in those tags to the machine 400, the fieldbus app can be designed and set up in a way, that the information contained in the tags is converted to corresponding IO data 263, which is then transmitted to the machine 400 via the fieldbus 202. Such IO data 263 is specifically adapted to the fieldbus 202 for transmission via the fieldbus 202 to the machine 400.

In the reverse direction, this communication chain works analogously. Machine data, relevant for controlling the machine 400 and to be sent from the machine 400 to the control app 110 of the controller 100, is transmitted as IO data 263 in a fieldbus specific format via the fieldbus 202 to the fieldbus app 200 of the controller 100. The fieldbus app converts this IO data 263 to contextualized IO data 152, named here "tag" 152. This tag 152 has, as already described, a standardized middleware data format, which is fieldbus-independent according to the present description.

This conversion of fieldbus 202 specific IO data 263 to tags 152 in a standardized middleware format, which is fieldbus-independent, is an example of IO abstraction according to the present description.

This tag 152 is now transferred from the fieldbus app 200 to the middleware 150 and from the middleware 150 to the control app 110, e.g. to be used as input data during execution of the user program 112.

The controller 100 in figure 1 further comprises a visualization app 120 for connecting the controller 100 to a human machine interface device or system (HMI device or HMI system). Such HMI device or system is not shown in figure 1.

The controller 100 further comprises a diagnostic client app 130 for outputting, analyzing and/or reacting on diagnostic information regarding the controller 100, the fieldbus 202, a working status of the controller 100 or an operating status of the control app 110 controlling the machine 400, e.g. to be connected or connectable to an external computing device. The diagnostic client app 130 is also designed and set up or collecting, analyzing and/or outputting diagnostic information regarding the fieldbus 202 and the fieldbus app 200. The external computing device, mentioned here in this respect, is not shown in figure 1.

The controller 100 further contains a configuration manager app 140, which is an example for a configuration manager component according to the present description. The visualization app 120, the diagnostic client app 130 and the configuration manager app 140 are connected to the middleware 150 for exchanging according e.g. tags 152 and other middleware compliant data.

The configuration manager app 140 is for example designed and set up to set and change parameters and/or configurations of the fieldbus app 200. Such parameters can be for example regarding the transformation between the I/O data 263 transmitted or transmittable via the field bus 202 and being specific for the fieldbus 202, and corresponding contextualized IO data 152 or tags 152.

Configurations used by the configuration manager app 140 for configuring for example the fieldbus app 200 can for example be set by an automation engineering system 300 communicatively connected to the controller 100 via the configuration manager app 140. Such automation engineering system 300 can for example also be communicatively connected to other components of the controller 100, for example the middleware 150 and/or the control app 110. The engineering system 300 can for example be designed and set up to develop a user program 112 and implement it in the control app 110.

The controller 100 shown in figure 1 and described above is designed and set up as a so-called virtual PLC (PLC: programmable logic controller) or soft PLC 100. The control app 110, the visualization app 120 the diagnostic client app 130, the middleware 150, the configuration manager app 140 and the fieldbus app 200 are realized in this case as software applications or apps. These software applications can e.g. be installed, implemented or instantiated on a computer hardware, e.g. an industrial PC (IPC), an edge device or other comparable computer hardware. The controller 100 is e.g. realized by the collection of software applications named above. The controller 100 is also realized by a combination of these software applications and the computer hardware as described above, on which those software applications are installed.

In an alternative embodiment, the controller 100 could also be realized as a hardware PLC, whereas the control app 110 can in this case be replaced by a CPU module, the visualization app 120 can be replaced by a visualization module, the diagnostic client app 130 can be part of the CPU module or be replaced by a diagnostic module, the configuration manager app can be a part of the CPU module and the fieldbus app 200 can be replaced by a fieldbus connection of the CPU module or a separate fieldbus communication module. The middleware 150 shown in figure 1 can in this case of a hardware PLC be replaced by a backplane communication bus for connecting the different modules named above.

Figure 2 shows a more detailed view of the example embodiment shown in figure 1. It shows e.g. the design and set up of the fieldbus app 200 shown in Figure 1 and its functionality within the controller 100 in more detail.

The fieldbus app 200, as shown in figure 2, comprises an I/O abstraction component 210 and a fieldbus connectivity component 260. The abstraction component 210 is an example for an abstraction module according to the present description. The fieldbus connectivity component 260 is an example for a connectivity module according to the present description.

The fieldbus connectivity component 260 is designed and set up for handling all fieldbus 202 specific activities running inside the fieldbus app 260.

The fieldbus connectivity component 260 contains a process image storage component 262 for storing fieldbus 202 specific IO data 263 to be transmitted to the machine 400 or coming from the machine 400 via the fieldbus 202. Such IO data 263 can for example be all kind of data coming from sensors and/or actuators of the machine 400 and other sensors and/or actuators elsewhere in the control system under consideration here. IO data 263 can for example be the data relevant for controlling the machine 400 by the controller 100.

The fieldbus connectivity component 260 also contains a diagnostic data storage component 264 for storing fieldbus 202 specific diagnostic data 265 received via the fieldbus 202, to be sent via the fieldbus 202 and/or originating from a corresponding fieldbus protocol stack or fieldbus driver. The fieldbus connectivity component 260 also contains an alarm data storage component 266 for storing alarm data 267 received via the field bus 202, to be sent via the fieldbus 202 and/or originating from a corresponding fieldbus 202 protocol stack or fieldbus 202 driver.

The process image storage component 262, the diagnostic data storage component 264 and/or the alarm data storage component 266 can be designed and set up as input/output buffers for storing the corresponding data to be sent via the fieldbus 202, received via the field bus 202 and/or originating from a corresponding fieldbus 202 protocol stack or fieldbus 202 driver.

Having such input/output buffers 262, 264, 266 improves the ability of the fieldbus app 200 to decouple the fieldbus 202 communication from the communication between the fieldbus app 200 and the middleware 150. Such input/output buffers 262, 264, 266 for example enable an adaption to special communication cycles and/or schemes of the fieldbus 202 and separating such communication cycles and/or schemes from communication cycles and/or schemes used for the communication between the fieldbus app 200 and the middleware 150.

The I/O abstraction component 210 contains a transformation logic 230 for converting
- fieldbus 202 specific data 263, 265, 267
- into fieldbus 202 independent contextualized data, tags, variables or information 152, 154, 156 and/or into contextualized data 152, 154, 156,
- to be transmitted from the fieldbus app 200 to the middleware 150, and/or to be transmitted via the middleware 150 to different components and/or apps 110, 120, 130, 140, 200 of the controller 100.

The transformation logic 230 is designed and set up to transform three different kinds of fieldbus 202 specific data to corresponding contextualized data, tags, variables or information 152, 154, 156.

An IO data transformation engine 232 of the transformation logic 230 is designed and set up to transform IO data 263, which is fieldbus 202 specific, into fieldbus 202 independent, contextualized IO data 152, named here tags 152, and vice versa. Such contextualized IO data 152 or tags 152 are examples for middleware variables according to the present description.

A diagnostic transformation engine 234 of the transformation logic 230 is designed and set up to transform diagnostic data 265, being fieldbus 202 specific, into fieldbus independent contextualized diagnostic information 154, and vice versa. Such fieldbus 202 independent contextualized diagnostic information 154 is an example for middleware diagnostic information according to the present description.

An alarm transformation engine 236 of the transformation logic 230 is designed and set up to transform alarm data 267, being fieldbus 202 specific, into fieldbus independent contextualized event information 156, and vice versa. Such fieldbus 202 independent contextualized event information 156 is an example for middleware event information according to the present description.

A northbound interface 220 of the IO abstraction component 210 enables and/or realizes a fieldbus 202 independent communication of contextualized I/O data 152 between the middleware 150 and the I/O data transformation engine 232. The northbound interface 220 also enables and/or realizes a fieldbus 202 independent diagnostic interface for communicating contextualized diagnostic data 154 between the middleware 150 and the diagnostic transformation engine 234. The northbound interface 220 also enables a fieldbus 202 independent event interface for communication of event information 156 between the middleware 150 and the alarm transformation engine 236.

A southbound interface 240 of the IO abstraction component 210 enables and/or realizes a communication of fieldbus 202 specific IO data 263 between the process image 262 of the fieldbus connectivity component 260 and the IO data transformation engine 232 of the IO Abstraction component 210. The southbound interface 240 of the IO abstraction component 210 also enables and/or realizes a communication of fieldbus 202 specific diagnostic data 265 between the diagnostic data storage 264 of the fieldbus connectivity component 260 and the diagnostic transformation engine 234 of the IO Abstraction component 210. The southbound interface 240 of the IO abstraction component 210 also enables and/or realizes a communication of fieldbus 202 specific alarm data 267 between the alarm data storage 266 of the fieldbus connectivity component 260 and the alarm transformation engine 236 of the IO Abstraction component 210.

The IO abstraction component 210 and the fieldbus connectivity component 260 with all their subcomponents are fully configurable and parameterizable with all their components. This means, that, for example the northbound interface 220, the transformation logic 230 and the southbound interface 240 of the I/O abstraction component 210 are fully configurable and parameterizable. Also, the I/O data transformation engine 232, the diagnostic transformation engine 234 and/or the alarm transformation engine 236 are separately configurable and/or parameterizable for the specific needs of the defined or used contextualized or middleware information or tags, and the corresponding fieldbus specific corresponding data.

Also, the fieldbus connectivity component 260 is fully configurable and parameterizable and can be, for example, adapted to different settings, set ups and working states of the underlying fieldbus 202. The fieldbus connectivity component 260 can also be adapted to different fieldbuses 202, e.g. a ProfiNet-fieldbus, a Modbus-fieldbus, an EtherCat-fieldbus or an EthernetIP-fieldbus.

The fieldbus connectivity component 260 can, for example, comprise a fieldbus 202 specific protocol stack and/or a fieldbus 202 specific driver. In an alternative embodiment and/or set up, the fieldbus connectivity component can also be connected to a fieldbus 202 specific protocol stack and/or a fieldbus 202 specific driver of the controller 100.

Such configuration can for example be performed, set up and/or generated by defining the data to be communicated by the fieldbus 202, for example data items of IO data 263, diagnostic data 265 and/or alarm data 267, in the automation engineering system 300. Additionally, the data to be communicated via the middleware 150, for example tags 152, contextualized diagnostic data 154 and/or contextualized events data 156, can be defined in the automation engineering system 300. Within the automation engineering system 300, then the data items to be communicated by the fieldbus 202 as explained above can be assigned to the corresponding data items to be communicated via the middleware 150 as explained above.

Such configuration can further also contain information regarding the configuration of the communication link, for example the fieldbus 202.

The configuration can also contain definitions and/or further information regarding all kinds of data to be transmitted via the communication link, for example the fieldbus 202. Such data can for example be IO control data, IO diagnostic data and/or IO alarm data according to the present description, for example IO data 263, diagnostic data 265 and/or alarm data 267 as shown in figure 2.

Then the automation engineering system 300 can for example generated one or more data files and/or executable code containing those definitions and assignments and communicate such information, files and/or executable code to the configuration manager app 140 of the controller 100.

The configuration manager app 140 is then designed and set up to implement these configurations in the corresponding parts of the fieldbus app 200, for example the transformation logic 230, the northbound interface 220, the southbound interface 240 and also the fieldbus connectivity component 260.

In the following a few examples for files, or part of files, are described, which can be transmitted to and/or used by the configuration manager app 140 for configuring the fieldbus app 200. Such files can also be used, e.g. among others, for setting up the fieldbus app 200 and/or for generating or creating the fieldbus app 200.
- A file (e.g. XML- or YML-file) or executable code containing configuration information for the fieldbus app 200 and/or information regarding additional files for setting up, configuring and/or running an IO-component according to the present description, e.g. the fieldbus app 200.
- A file (e.g. XML- or YML-file) or executable code containing definitions, metainformation and/or further information regarding all kinds of middleware variables according to the present description, e.g. tags 152, middleware diagnostic information according to the present description, e.g. contextualized diagnostic data 154, and/or middleware event information according to the present description, e.g. event information 156.
- A file (e.g. XML- or YML-file) or executable code containing a configuration of a communication link according to the present description, e.g. the fieldbus 202.
- A file (e.g. XML- or YML-file) or executable code containing information and/or metadata regarding configured data to be communicated or communicated via the communication-link according to the present description, e.g. via the fieldbus 202. This can e.g. be such data, e.g. IO data 263, diagnostic data 265 and/or alarm data 267, that can be mapped to middleware variables according to the present description, e.g. tags 152, middleware diagnostic information according to the present description, e.g. contextualized diagnostic data 154, and/or middleware event information according to the present description, e.g. event information 156.
- A file (e.g. XML- or YML-file) or executable code containing a mapping of data to be communicated or communicated via the communication-link according to the present description, e.g. via the fieldbus 202 to variables, tags, information or the like to be communicated or communicated via the middleware 150. Such mapping can e.g. be a mapping of e.g. IO data 263, diagnostic data 265 and/or alarm data 267 to middleware variables according to the present description, e.g. tags 152, middleware diagnostic information according to the present description, e.g. contextualized diagnostic data 154, and/or middleware event information according to the present description, e.g. event information 156.

One or more files for configuration of the fieldbus app 200 can e.g. contain one or more of the files named above or parts of such files.

Such configuration information, as described above, can be used e.g. in a corresponding software development kit (SDK) according to the present description for generating an I/O component according to the present description. By using such SDK together with this configuration information, a fieldbus app 200 can be generated, which is adjusted to the the controller 100, a corresponding middleware 150 of the controller 100 and a specific communication link, for example a specific fieldbus 202.

Such SDK allows for example, to switch the communication of the controller 100 with the machine 400 quite easily to a different fieldbus 202 technology or type. For generating such a new fieldbus app 200 for the new fieldbus 202, for example a configuration file regarding the configuration of the new fieldbus 202, and eventually also regarding a definition of the data to be transmitted via the new fieldbus 202, has to be generated to replace the corresponding data regarding the old fieldbus 202 to generate a new software development kit (SDK). Using this new SDK, a new fieldbus app 200 can be generated for the new fieldbus 202, which then can replace the old fieldbus app 200 in the controller 100.

## Claims

1. Input/Output-component (200) (IO-component) for a control device (100) for controlling a device (400) or system,
wherein the IO-component (200) is designed and set up
- for input and/or output of IO control data (263) into and/or out of the control device (100) via a communication link (202) using a communication protocol,
- and for connection to a middleware component (150) of the control device (100),
and wherein the IO-component (200) is designed and set up for converting IO control data (263) received via the communication link (202) into middleware variables (152) assigned to the IO control data (263), and subsequently for transmitting these middleware variables (152) to the middleware component (150),
**characterized in,**
**that** the IO-component (200) is designed and set up for converting the IO control data (263) into the middleware variables (152) in such a way,
- **that** the middleware variables (152) are independent of the communication protocol,
- and **that**, as part of the conversion of the IO control data (263) into the protocol-independent middleware variables (152), a normalization, standardization, logical structuring and/or contextualization of the IO control data (263) takes place.

2. IO-component according to claim 1,
**characterized in,**
**that** the IO-component (200) is designed and set up
- for converting middleware variables (152) into IO control data (263) to be sent via the communication link,
- and subsequently for outputting this IO control data (263) via the communication link (202), whereas the middleware variables (152) are independent of the communication protocol.

3. IO-component according to one of the preceding claims,
**characterized in**
**that** the IO-component (200) can be parameterized with regard to the normalization, standardization, logical structuring and/or contextualization of the IO control data (263), and the IO-component (200) is furthermore designed and set up in such a way that this parameterization can be set up and changed,
in particular that the IO-component (200) is designed and set up in such a way that this parameterization can be set up and changed via a configuration manager component (140) of the control device (100).

4. IO-component according to one of the preceding claims,
**characterized in**
**that** the IO-component (200) comprises a state machine, which is designed and set up such that during operation the IO-component (200) assumes one of a plurality of operating states defined by the state machine.

5. IO-component according to one of the preceding claims,
**characterized in,**
**that** the IO-component (200) is furthermore designed and set up for inputting and/or outputting IO diagnostic data (265) into and/or out of the control device (100) via the communication link (202) using the communication protocol, and
**that** the IO component (200) is designed and set up for converting IO diagnostic data (265) received via the communication link (202) into middleware diagnostic information (154) assigned to the IO diagnostic data (265), and for transmitting this middleware diagnostic information (154) to the middleware component (150),
whereas the middleware diagnostic information (154) is independent of the communication protocol.

6. IO-component according to claim 5,
**characterized in**
**that** the IO-component (200) is configurable with regard to the conversion of IO diagnostic data (265) into middleware diagnostic information (154), and the IO-component (200) is furthermore designed and set up in such a way that this configuration can be set up and changed,
in particular in that this configuration can be set up and changed via a configuration manager component (140) of the control device (100).

7. IO-component according to one of the preceding claims,
**characterized in**
**that** the IO component (200) is furthermore designed and set up for the input and/or output of IO alarm data (267) to and/or from the control device (100) via the communication link (202) using the communication protocol,
the IO component (200) being designed and set up for the conversion of IO alarm data (267) received via the communication link (202) into middleware event information (156) assigned to the IO alarm data (267), and for a transmission of this middleware event information (156) to the middleware component (150),
whereas the middleware event information (156) is independent of the communication protocol.

8. IO-component according to claim 7,
**characterized in**
**that** the IO-component (200) is configurable with regard to the conversion of the IO alarm data (267) into middleware event information (156), and the IO-component (200) is furthermore designed and set up in such a way that this configuration can be set up and changed,
in particular in that this configuration can be set up and changed via a configuration manager component (140) of the control device (100).

9. Control device (100) for controlling a machine (400) or system,
comprising an IO-component (200) according to one of the aforementioned claims and a middleware component (150), wherein the IO-component (200) is designed and set up for communication with the middleware component (150).

10. Control device according to claim 9,
**characterized in**
**that** the control device (100) further comprises
a configuration manager component (140) which is designed and set up for receiving configuration data, for coupling to the middleware component (150) and for configuring at least one software application (110, 120, 130, 200) and/or at least one hardware component coupled to the middleware on the basis of the received configuration data,
wherein furthermore the configuration manager component is designed and set up in particular
- for configuring the IO-component (200) with regard to the conversion of the IO control data (263) into middleware variables (152), in particular regarding the normalization, standardization, logical structuring and/or contextualization of the IO control data (263),
- and/or for configuring the IO-component (200) with regard to the conversion of the IO diagnostic data (265) into middleware diagnostic information (154),
- and/or for configuring the IO-component (200) with regard to the conversion of the IO alarm data (267) into middleware event information (156).

11. Control device according to claim 10,
**characterized in**
**that** the configuration manager component (140) is designed and set up for communication with the middleware component (150),
for communication with the IO-component (200),
and/or for communication with the IO-component (200) via the middleware component (150).

12. Software development kit comprising software elements for creating an IO-component (200) according to one of claims 1 to 8 in the form of a computer program product, the software elements comprising software modules and/or data relating to
- name and/or version of the IO-component (200),
- general mechanisms for integrating the IO-component (200) into the control device (100) and connecting the IO-component (200) to the middleware component (150),
- a coupling to the communication link (202) and a corresponding communication protocol,
- a creation of middleware variables (152), middleware event information (156) and/or middleware diagnostic information (154),
- relations regarding data (263, 265, 267) transmitted and/or to be transmitted via the communication link (202) and corresponding middleware variables (152), middleware event information (156) and/or middleware diagnostic information (154) communicated or to be communicated to or by the middleware component (150).

13. Software development kit comprising software elements for creating a configuration manager component (140) according to one of claims 3, 6, 8, 10 and/or 11 in the form of a computer program product, the software elements comprising software elements relating to:
- a creation of the configuration manager component (140) being designed and set up for receiving configuration data, for coupling to the middleware component (150) and for configuring an IO-component (200) according to one of claims 1 to 8, being coupled to the middleware component (150), and eventually being designed and set up for configuring further software applications (110, 120, 130, 200) coupled to the middleware component (150) based on the received configuration data.
